(19) Europäisches Patentamt
European Patent Office
Office européen des brevets

(11) **EP 4 215 550 A1**

(12) **EUROPEAN PATENT APPLICATION**
published in accordance with Art. 153(4) EPC

(43) Date of publication:
**26.07.2023 Bulletin 2023/30**

(21) Application number: **21869391.9**

(22) Date of filing: **15.09.2021**

(51) International Patent Classification (IPC):
**C08B 15/02** (2006.01)          **C08B 15/04** (2006.01)
**C08F 251/02** (2006.01)         **C08K 5/09** (2006.01)
**C08K 5/17** (2006.01)           **C08L 1/02** (2006.01)
**C08L 1/04** (2006.01)           **C08L 23/00** (2006.01)
**C08L 25/04** (2006.01)          **C08L 25/08** (2006.01)
**C08L 29/04** (2006.01)          **C08L 51/00** (2006.01)
**C08F 2/18** (2006.01)           **C08F 2/22** (2006.01)
**C08F 2/44** (2006.01)

(52) Cooperative Patent Classification (CPC):
**C08B 15/02; C08B 15/04; C08F 2/18; C08F 2/22;
C08F 2/44; C08F 251/02; C08K 5/09; C08K 5/17;
C08L 1/02; C08L 1/04; C08L 23/00; C08L 25/04;
C08L 25/08; C08L 29/04; C08L 51/00**

(86) International application number:
**PCT/JP2021/033937**

(87) International publication number:
**WO 2022/059705 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2020  JP 2020155856
03.02.2021  JP 2021015845
26.04.2021  JP 2021073760**

(71) Applicant: **Toagosei Co., Ltd.
Minato-ku
Tokyo 105-8419 (JP)**

(72) Inventors:
• **KAMIYA, Daisuke
  Nagoya-shi Aichi 455-0036 (JP)**
• **MATSUKI, Shiroshi
  Nagoya-shi Aichi 455-0026 (JP)**
• **GOTOU, Akihiro
  Nagoya-shi Aichi 455-0026 (JP)**
• **OKABE, Gen
  Nagoya-shi Aichi 455-0026 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **RESIN COMPOSITION, RESIN COMPOSITION MANUFACTURING METHOD, AND RESIN**

(57)    A resin composition containing a nanocellulose and a polymer of an ethylenically unsaturated monomer, wherein the nanocellulose contains an oxide of a cellulose raw material by a hypochlorous acid or a salt thereof, is substantially free of a N-oxyl compound, and satisfies following (I) and/or (II): (I) zeta potential is -30 mV or less; and (II) light transmittance in a mixed solution in which the nanocellulose and water are mixed and which has a solid content concentration of 0.1 mass% is 95% or more.

**Description**

**Technical Field**

The present invention relates to a resin composition, a method of producing the resin composition, and a resin.

**Background Art**

In recent years, as lightweight materials having excellent strength, resin materials in which strength is improved by being added with a reinforcing material have been widely used. As the reinforcing material, carbon fibers, glass fibers and the like are generally used. However, all of them have the problem that these materials are not suitable for thermal recycling because these are non-combustible materials. In addition, there are problems in that carbon fibers are expensive and glass fibers are heavy.

Therefore, in recent years, research on use of plant fibers as reinforcing materials for resins has been conducted. Plant fibers are not artificially synthesized, but are used as released plant-derived fibers. Since hardly any plant fibers remain as ash when burnt, problems, such as disposal of ash in an incineration furnace and landfill disposal do not occur. Therefore, in recent years, research on use of plant fibers as a reinforcing material for resins has progressed, and particularly, research on use of cellulose nanofibers obtained by fibrillating plant fibers to a nano level has been studied.

**Since** cellulose nanofibers have a large number of hydrophilic functional groups, problems, such as low affinity with resins and a sufficient reinforcing effect not being obtained even if the cellulose nanofibers are directly kneaded with resins, have been pointed out.

As a measure for addressing these problems, for example, Patent Document 1 discloses a method of mixing cellulose nanofibers, which are present on the surface of resin particles, with resins, instead of directly mixing cellulose nanofibers with resins.

Citation List

Patent Document

Patent Document 1: Patent Publication JP-A-2013-014741

**Summary**

Technical Problem

It is said that the resin composition, which is the resin modifier in Patent Document 1, has favorable dispersion of cellulose nanofibers in the resin to be modified, exhibits an excellent modification effect, and increases the strength of the resin. However, further increase in the strength of the resin in the resin composition is required.

The present invention has been made in view of the above circumstances, and a main object of the present invention is to provide a resin composition having excellent strength.

Solution to Problem

**The** inventors conducted extensive studies in order to address the above problems, and as a result, found that, with a resin composition containing a predetermined nanocellulose, it is possible to increase the strength of a resin, and completed the present invention.

Specifically, the present invention provides the following aspects.

[1] A resin composition containing a nanocellulose and a polymer of an ethylenically unsaturated monomer, wherein

the nanocellulose

contains an oxide of a cellulose raw material by a hypochlorous acid or a salt thereof,

is substantially free of a N-oxyl compound, and

satisfies following (I) and/or (II);

(I) zeta potential is -30 mV or less; and
(II) light transmittance in a mixed solution in which the nanocellulose and water are mixed and which has a solid content concentration of 0.1 mass% is 95% or more.

[2] The resin composition according to [1],
wherein the nanocellulose has zeta potential of -70 mV or more.

[3] The resin composition according to [1] or [2],
wherein the nanocellulose has a carboxy group content of 0.30 mmol/g or more and less than 2.0 mmol/g.

[4] The resin composition according to any one of [1] to [3],

wherein the nanocellulose is derived from an oxidized cellulose, and
wherein a degree of polymerization of the oxidized cellulose is 600 or less.

[5] The resin composition according to any one of [1] to [4],
wherein the polymer of the ethylenically unsaturated monomer contains a rubber-modified styrene resin.

[6] The resin composition according to any one of [1] to [4],
wherein the polymer of the ethylenically unsaturated monomer contains a polyvinyl alcohol.

[7] The resin composition according to any one of [1] to [6],
wherein an amount of the polymer of the ethylenically unsaturated monomer with respect to 100 parts by mass of the nanocellulose is 5 parts by mass or more and 1,000 parts by mass or less.

[8] The resin composition according to any one of [1] to [7],
wherein at least part of the nanocellulose is modified with a metallic soap, an amine or a quaternary ammonium.

[9] A method of producing a resin composition, the method including a step of polymerizing an ethylenically unsaturated monomer in the presence of a nanocellulose, wherein the nanocellulose

is an oxide of a cellulose raw material by a hypochlorous acid or a salt thereof,

is substantially free of a N-oxyl compound, and

satisfies following (I) and/or (II):

(I) zeta potential is -30 mV or less; and
(II) light transmittance in a mixed solution in which the nanocellulose and water are mixed and which has a solid content concentration of 0.1 mass% is 95% or more.

[10] The production method according to [9],
wherein the polymerization method is an emulsion polymerization or a suspension polymerization.

[11] A method of producing a resin composition containing a nanocellulose and a polymer of an ethylenically unsaturated monomer, the method including:

a step of stirring a first mixture containing an oxidized cellulose and an ethylenically unsaturated monomer to obtain a second mixture containing the nanocellulose and the polymer of the ethylenically unsaturated monomer; and

a step of polymerizing the ethylenically unsaturated monomer using the second mixture,

wherein the oxidized cellulose contains an oxide of a cellulose raw material by a hypochlorous acid or a salt thereof.

[12] A method of producing a resin composition containing a nanocellulose and a polymer of an ethylenically unsaturated monomer, the method including:

a step of stirring an oxidized cellulose and continuously adding the ethylenically unsaturated monomer to obtain a mixture containing the nanocellulose and the ethylenically unsaturated monomer; and

a step of polymerizing the ethylenically unsaturated monomer using the mixture,

wherein the oxidized cellulose contains an oxide of a cellulose raw material by a hypochlorous acid or a salt thereof.

[13] The production method according to [11] or [12],
wherein the polymerization method is an emulsion polymerization or a suspension polymerization.

[14] A method of producing a resin composition containing a nanocellulose and a polymer of an ethylenically unsaturated monomer, the method including

a step of stirring a first mixture containing an oxidized cellulose and the polymer of the ethylenically unsaturated monomer to obtain the resin composition containing the nanocellulose and the polymer of the ethylenically unsaturated monomer,

wherein the oxidized cellulose contains an oxide of a cellulose raw material by a hypochlorous acid or a salt thereof.

[15] A method of producing a resin composition containing a nanocellulose and a polymer of an ethylenically unsaturated monomer, the method including

a step of stirring an oxidized cellulose and continuously adding the polymer of the ethylenically unsaturated monomer to obtain the resin composition containing the nanocellulose and the polymer of the ethylenically unsaturated monomer,

wherein the oxidized cellulose contains an oxide of a cellulose raw material by a hypochlorous acid or a salt thereof.

[16] The production method according to any one of [11] to [15],
wherein the oxidized cellulose is substantially free of a N-oxyl compound.

[17] The production method according to any one of [11] to [16], wherein a degree of polymerization of the oxidized cellulose is 600 or less.

[18] The production method according to any one of [11] to [17], further including
a step of adding a metallic soap, an amine or a quaternary ammonium to precipitate the nanocellulose and the ethylenically unsaturated monomer.

[19] A resin including the resin composition according to any one of [1] to [8].

[20] A polyvinyl alcohol film produced from the resin composition according to [6].

Advantageous Effects of Invention

According to the present invention, it is possible to provide a resin composition having excellent strength.

**Brief Description of Drawings**

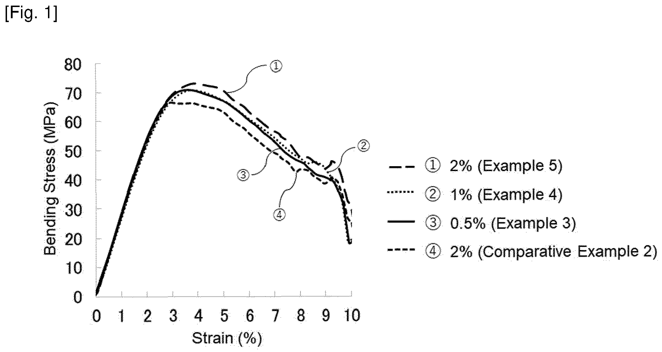

Fig. 1 is a diagram showing the results of breaking strain and breaking stress.

**Description of Embodiments**

Hereinafter, forms for implementing the present invention will be described in detail. However, the present invention is not limited to the following embodiments. In the following embodiments, constituent elements (also including elemental steps and the like) are not essential unless other specified. The same applies to numerical values and ranges thereof, and they do not limit the present invention.

In the present disclosure, the term "step" includes a step that is independent of other steps, and also includes a step whose purpose is achieved even if it cannot be clearly distinguished from other steps.

In the present disclosure, when a numerical range is indicated using "to", it means that numerical values stated before and after "to" are included as a minimum value and a maximum value.

In stepwise numerical ranges described in the present disclosure, an upper limit value or a lower limit value in one numerical range may be replaced with an upper limit value or a lower limit value of other described stepwise numerical ranges.

In addition, in the numerical ranges described in the present disclosure, the upper limit value or the lower limit value of the numerical range may be replaced with values shown in examples.

In the present disclosure, each component may contain a plurality of corresponding substances. When there are a plurality of types of substances corresponding to each component in the composition, a content percentage or content of each component means a total content percentage or content of the plurality of types of substances present in the composition unless otherwise noted.

In the present disclosure, a plurality of types of particles corresponding to each component may be included. When there are a plurality of types of particles corresponding to each component in the composition, the particle size of each component means a value for a mixture including the plurality of types of particles present in the composition unless otherwise noted.

In the present disclosure, "(meth)acryl" means at least one of acryl and methacryl, and "(meth)acrylate" means at least one of acrylate and methacrylate.

<Resin Composition>

A resin composition of the present invention contains a nanocellulose and a polymer of an ethylenically unsaturated monomer. The nanocellulose contains an oxide of a cellulose raw material by a hypochlorous acid or its salt, and is substantially free of a N-oxyl compound. In addition, the nanocellulose satisfies the following (I) and/or (II):

(I) the zeta potential is -30 mV or less;

(II) the light transmittance in a mixed solution in which the nanocellulose and water are mixed and which has a solid content concentration of 0.1 mass% is 95% or more.

The resin composition of the present invention is a composition that mainly contains a polymer of an ethylenically unsaturated monomerr as a constituent resin. Here "mainly containing a polymer of an ethylenically unsaturated monomer as a constituent resin" means that the proportion of the polymer of the ethylenically unsaturated monomer with respect to a total amount of the resin constituting the composition generally exceeds 50 mass%. The proportion may be 60 mass% or more, more than 70 mass%, more than 80 mass%, more than 90 mass%, more than 95 mass%, or 100 mass%.

The form of the resin composition of the present invention is not particularly limited, and may be, for example, a form of a powder, pellets or lumps.

The resin composition of the present invention in the form of a powder, pellets, or lumps may be used for molding. In addition, the resin composition of the present invention may be used in the form of a powder, pellets, or lumps by mixing the resin composition with a target resin to be mixed in (hereinafter also referred to as a raw material resin). When a resin composition is mixed with a raw material resin, the resin composition is also called a resin-modifying composition.

That is, the present invention includes an embodiment in which the resin composition is used as a resin itself and an embodiment in which the resin composition is used as a resin-modifying composition.

The resin composition of the present invention contains a nanocellulose which contains an oxide of a cellulose raw material by a hypochlorous acid or its salts and is substantially free of N-oxyl compounds, and satisfies (I) and/or (II). As will be described in detail in the following [Method of Producing Nanocellulose], such nanocellulose is obtained by a method of oxidizing a cellulose raw material by a hypochlorous acid or its salts to obtain an oxidized cellulose (that is, an oxide of the cellulose raw material) and fibrillating the oxidized cellulose, and in this method, the oxidized cellulose can exhibit ease-of-fibrillatability, this fibrillation operation allows fibrillation to proceed sufficiently, and the dispersibility of the obtained nanocellulose increases. In addition, the resin composition of the present invention can be obtained by mixing the oxidized cellulose with a resin or a resin raw material, appropriately fibrillating and forming it into a nano size, and combining the nanocellulose and a polymer of the ethylenically unsaturated monomer.

The nanocellulose is combined with the polymer of the ethylenically unsaturated monomer to obtain a resin composition in which nanocellulose is uniformly dispersed in the polymer. As a result, it is thought that, in the resin composition of the present invention, fine celluloses are uniformly dispersed in a resin, and a resin having strength, specifically, strength such as that according to bending elastic modulus and impact resistance, is obtained.

[Nanocellulose]

The nanocellulose in the present invention is obtained by forming the oxidized cellulose, which is obtained by oxidizing a cellulose raw material by a hypochlorous acid or its salts, into a nano size. Here, the oxidized cellulose can also be an oxide of a cellulose raw material. Therefore, the nanocellulose in the present invention contains an oxide of a cellulose raw material by a hypochlorous acid or its salts. Here, the main component of plants is cellulose, and bundles of cellulose molecules are called cellulose microfibrils. The cellulose in the cellulose raw material is also contained in the form of cellulose microfibrils. The nanocellulose in the present invention is a generic term for nano-sized celluloses, and includes fine cellulose fibers, cellulose nanocrystals and the like, and also includes modified components thereof (modified components will be described in detail). Fine cellulose fibers are also called cellulose nanofibers (also referred to as CNF).

The nanocellulose in the present invention can be produced according to, for example, a production method including a step of oxidizing a cellulose raw material using a hypochlorous acid having an available chlorine concentration of 7 mass% or more and 43 mass% or less or its salts to produce oxidized cellulose, and as necessary, a step of performing a fibrillation treatment on the oxidized cellulose and forming it into a nano size. Preferably, the nanocellulose in the present invention can be obtained by, for example, oxidizing a cellulose raw material in a reaction system under conditions in which an available chlorine concentration of a hypochlorous acid or its salts is set to be a relatively high concentration (for example, 14 mass% to 43 mass%), and as necessary, fibrillating the oxidized cellulose.

The resin composition of the present invention contains nanocellulose, and it can be produced by mixing in oxidized cellulose that has been fibrillated and formed into a nano size, or oxidized cellulose can be used as a raw material when the resin composition is prepared, and the oxidized cellulose can be formed into a nano size during preparation for production. Therefore, the nanocellulose in the resin composition is formed into a nano size at an appropriate time.

In the production of the nanocellulose in the present invention, in a treatment of oxidizing a cellulose raw material by a hypochlorous acid or its salts, N-oxyl compounds such as TEMPO are not used. Therefore, the nanocellulose or oxidized cellulose in the present invention is substantially free of N-oxyl compounds. Therefore, the nanocellulose is highly safe because the impact of N-oxyl compounds on the environment and human body is sufficiently reduced. Here, in this specification, nanocellulose or oxidized cellulose being "substantially free of N-oxyl compounds" means that no N-oxyl compound is used when oxidized cellulose is produced or the content of N-oxyl compounds with respect to a total amount of nanocellulose is 2.0 ppm by mass or less and preferably 1.0 ppm by mass or less. In addition, when the content of N-oxyl compounds is preferably 2.0 ppm by mass or less and more preferably 1.0 ppm by mass or less as an addition from the cellulose raw material, it means that it is "substantially free of the N-oxyl compound".

The content of N-oxyl compounds can be measured by a known method. Examples of known methods include a method using a trace total nitrogen analysis device. Specifically, the nitrogen component derived from N-oxyl compounds in nanocellulose can be measured using a trace total nitrogen analysis device (for example, device name: TN-2100H commercially available from Mitsubishi Chemical Analytech Co., Ltd.) as a nitrogen content.

The oxidized cellulose has excellent fibrillatability. Particularly, the oxidized cellulose can be uniformly refined even if a fibrillation treatment is performed under mild conditions, and has excellent ease-of-fibrillatability. In addition, when it is mixed with the nanocellulose to form a slurry state, the viscosity of the slurry is stable over time and handling properties are excellent.

The nanocellulose in the present invention can be produced according to an oxidation reaction using a hypochlorous acid or its salts as described in detail in the following [Method of Producing Nanocellulose], and satisfies the following zeta potential and light transmittance. The zeta potential and the light transmittance can be used as indicators of forming nanocellulose.

(Zeta Potential)

The nanocellulose in the present invention has a zeta potential of -30 mV or less. When the zeta potential is -30 mV or less (that is, the absolute value is 30 mV or more), sufficient repulsion between microfibrils is obtained, and nanocellulose with a high surface charge density is likely to be produced during mechanical fibrillation. Thereby, the dispersion stability of nanocellulose is improved, and viscosity stability and handling properties when made into a slurry can be improved.

When the zeta potential is -100 mV or more (that is, the absolute value is 100 mV or less), since oxidative cutting during the oxidation in the fiber direction tends to be minimized, nanocellulose with a uniform size can be obtained, the nanocellulose is stable and highly dispersible, and the nanocellulose is uniformly contained in the obtained resin composition.

In view of the above viewpoint, the zeta potential of nanocellulose is preferably -35 mV or less, more preferably -40 mV or less, and still more preferably - 50 mV or less. In addition, the lower limit of the zeta potential is preferably -90 mV or more, more preferably -85 mV or more, still more preferably -80 mV or more, yet more preferably -77 mV or more, yet more preferably -70 mV or more, and yet more preferably -65 mV or more. It is preferably -90 mV or more and -30 mV or less, more preferably -85 mV or more and -30 mV or less, still more preferably -80 mV or more and -30 mV or less, yet more preferably -77 mV or more and -30 mV or less, yet more preferably -70 mV or more and -30 mV or less, yet more preferably -65 mV or more and -30 mV or less, and yet more preferably -65 mV or more and -35 mV or less. Here, in this specification, the zeta potential is a value measured under conditions of a pH of 8.0 and 20°C for a cellulose aqueous dispersion in which nanocellulose and water are mixed and the nanocellulose concentration is 0.1 mass%. Specifically, the zeta potential can be measured according to conditions described in examples to be described below.

(Light Transmittance)

A nanocellulose dispersion obtained by dispersing nanocellulose according to the present invention having a narrow fiber width and few aggregates in a dispersion medium can exhibit high light transmittance with little light scattering of cellulose fibers. Specifically, the nanocellulose in the present invention has a light transmittance of 95% or more in a mixed solution obtained by mixing with water and having a solid content concentration of 0.1 mass%. The light transmittance is more preferably 96% or more and still more preferably 97% or more. Here, the light transmittance is a value measured with a spectrophotometer at a wavelength of 660 nm. In addition, the light transmittance can be measured using an aqueous dispersion containing nanocellulose.
Specifically, it can be measured according to conditions described in examples to be described below.
As described above, the nanocellulose in the present invention is obtained by fibrillating after the oxidized cellulose is obtained using hypochlorous acid or its salts.
Here, the degree of polymerization of the oxidized cellulose used in the present invention is preferably 600 or less. When the degree of polymerization of the oxidized cellulose exceeds 600, it tends to require a large amount of energy for fibrillation, sufficient ease-of-fibrillatability cannot be exhibited, it tends to cause a decrease in dispersibility, and eventually, a decrease in strength of the resin. In addition, when the degree of polymerization of the oxidized cellulose exceeds 600, the amount of oxidized cellulose that is insufficiently fibrillated increases. Therefore, when nanocellulose obtained by refining this is dispersed in a dispersion medium, light scattering and the like increase, and the transparency may decrease. In addition, the size of the obtained nanocellulose tends to vary, and the quality tends to be uneven. Therefore, the viscosity of the slurry containing nanocellulose (hereinafter also referred to as a "nanocellulose-containing slurry") increases and handling properties of the slurry may decrease. In consideration of ease-of-fibrillatability, the lower limit of the degree of polymerization of the oxidized cellulose is not particularly set. However, when the degree of polymerization of the oxidized cellulose is less than 50, the proportion of particulate cellulose is larger than that of fibrous cellulose, and there is a risk of a reinforcing effect when added to a resin decreasing. In view of the above viewpoint, the degree of polymerization of the oxidized cellulose is preferably in a range of 50 or more and 600 or less.
The degree of polymerization of the oxidized cellulose is more preferably 580 or less, still more preferably 560 or less, yet more preferably 550 or less, yet more preferably 500 or less, yet more preferably 450 or less, and yet more preferably 400 or less. In order to improve the viscosity stability of the slurry, the lower limit of the degree of polymerization is more preferably 60 or more, still more preferably 70 or more, yet more preferably 80 or more, yet more preferably 90 or more, yet more preferably 100 or more, yet more preferably 110 or more, and particularly preferably 120 or more. A preferable range of the degree of polymerization can be determined by appropriately combining the upper limits and lower limits described above. The degree of polymerization of the oxidized cellulose is more preferably 60 to 600, still more preferably 70 to 600, yet more preferably 80 to 600, yet more preferably 80 to 550, yet more preferably 80 to 500, yet more preferably 80 to 450, and particularly preferably 80 to 400.
Here, the degree of polymerization of the oxidized cellulose can be adjusted by changing the reaction time, the reaction temperature, pH, the available chlorine concentration of hypochlorous acid or its salts and the like during the oxidation reaction. Specifically, since the degree of polymerization tends to decrease when the degree of oxidation increases, in order to reduce the degree of polymerization, for example, methods of increasing the oxidation reaction time and/or reaction temperature may be exemplified. As another method, the degree of polymerization of the oxidized cellulose can be adjusted according to stirring conditions of the reaction system during the oxidation reaction. For example, under conditions in which the reaction system is sufficiently uniformized using a stirring blade or the like, the oxidation reaction smoothly proceeds, and the degree of polymerization tends to decrease. On the other hand, under conditions in which the reaction system is likely to be insufficiently stirred such as by stirring with a stirrer, the reaction tends to be uneven, and it is difficult to sufficiently reduce the degree of polymerization of the oxidized cellulose. In addition, the degree of polymerization of the oxidized cellulose tends to vary depending on the selection of raw material cellulose. Therefore, the degree of polymerization of the oxidized cellulose can be adjusted by selecting the cellulose raw material. Here, in this specification, the degree of polymerization of the oxidized cellulose is the average degree of polymerization (viscosity average degree of polymerization) measured by a viscosity method. For details, follow the method described in examples to be described below.

(Carboxy Group Content)

The carboxy group content of nanocellulose and oxidized cellulose is preferably 0.30 mmol/g or more and less than 2.0 mmol/g. When the carboxy group content is 0.30 mmol/g or more, sufficient ease-of-fibrillatability can be imparted to oxidized cellulose. Thereby, even if a fibrillation treatment is performed under mild conditions, it is possible to obtain a nanocellulose-containing slurry with uniform quality, and it is possible to improve the viscosity stability and handling properties of the slurry. On the other hand, when the carboxy group content is less than 2.0 mmol/g, it is possible to minimize excessive decomposition of cellulose during a fibrillation treatment, and it is possible to obtain nanocellulose with a small proportion of particulate cellulose and uniform quality. This is thought to enable the dispersibility to improve, and the strength of the resin containing nanocellulose to be increased. In this regard, the carboxy group content of oxidized cellulose is more preferably 0.35 mmol/g or more, still more preferably 0.40 mmol/g or more, yet more preferably 0.42 mmol/g or more, yet more preferably 0.50 mmol/g or more, yet more preferably more than 0.50 mmol/g, and yet more preferably 0.55 mmol/g or more. The upper limit of the carboxy group content is more preferably 1.5 mmol/g or less, still more preferably 1.2 mmol/g, yet more preferably 1.0 mmol/g or less, and yet more preferably 0.9 mmol/g. A preferable range of the carboxy group content can be determined by appropriately combining the upper limits and lower limits described above. The carboxy group content of this oxidized cellulose is more preferably 0.35 to 2.0 mmol/g, still more preferably 0.35 to 1.5 mmol/g, yet more preferably 0.40 to 1.5 mmol/g, yet more preferably 0.50 to 1.2 mmol/g, yet more preferably more than 0.50 to 1.2 mmol/g, and yet more preferably 0.55 to 1.0 mmol/g.

Here, when a 0.1 M hydrochloric acid aqueous solution is added to an aqueous solution in which oxidized cellulose is mixed with water, the pH is adjusted to 2.5, and a 0.05 N sodium hydroxide aqueous solution is then added dropwise, and the electrical conductivity is measured until the pH reaches 11.0, the carboxy group content (mmol/g) is a value calculated from the amount of sodium hydroxide (a) consumed in the neutralization stage of a weak acid with a mild change in the electrical conductivity using the following formula. For details, follow the method described in examples to be described below. The carboxy group content can be adjusted by changing the reaction time, the reaction temperature, the pH of the reaction solution and the like during the oxidation reaction.

$$\text{carboxy group content} = a \ (ml) \times 0.05 / \text{oxidized cellulose mass (g)}$$

The oxidized cellulose preferably has a structure in which at least two of hydroxyl groups of the glucopyranose ring constituting cellulose are oxidized, and more specifically, preferably has a structure in which hydroxyl groups at the 2nd position and the 3rd position of the glucopyranose ring are oxidized and carboxy groups are introduced. In addition, it is preferable that the hydroxyl group at the 6th position of the glucopyranose ring in the oxidized cellulose not be oxidized and remain as a hydroxyl group.

Here, the position of the carboxy group in the glucopyranose ring can be analyzed by comparing the solution NMR spectrum using a rayon oxide as a model molecule with the solid $^{13}$C-NMR spectrum of oxidized cellulose.

Rayon has the same chemical structure as cellulose, and its oxide (rayon oxide) is water-soluble. When rayon oxide is dissolved in heavy water and solution one-dimensional $^{13}$C-NMR measurement is performed, a carbon peak belonging to a carboxy group is observed at 165 to 185 ppm. In one form of oxidized cellulose or nanocellulose obtained by oxidizing raw material cellulose with a hypochlorous acid or its salts used in the present invention, two signals appear in this chemical shift range. In addition, according to solution two-dimensional NMR measurement, it can be determined that the carboxy group is introduced at the 2nd position and the 3rd position.

In solid $^{13}$C-NMR of oxidized cellulose or nanocellulose obtained by oxidizing raw material cellulose with a hypochlorous acid or its salts, when the amount of carboxy groups introduced is large, two signals appear at 165 to 185 ppm, and when the amount of carboxy groups introduced is small, a very broad signal may appear. As can be seen from the results of rayon oxide, signals of carboxy group carbon atoms introduced at the 2nd position and the 3rd position are close to each other, and separation of two signals is insufficient in solid $^{13}$C-NMR with low resolution. Therefore, when the amount of carboxy groups introduced is small, a broad signal is observed. That is, in the solid $^{13}$C-NMR spectrum, when the spread of peaks appearing at 165 to 185 ppm is evaluated, it can be confirmed that carboxy groups are introduced at the 2nd position and the 3rd position.

That is, after drawing a base line for peaks in the range of 165 ppm to 185 ppm in the solid $^{13}$C-NMR spectrum and obtaining a total area value, the ratio of two peak area values (large area value/small area value) obtained by vertically dividing the area value at the peak top is obtained, and if the ratio of the peak area values is 1.2 or more, it can be said that the peak is broad.

The presence/absence of this broad peak can also be evaluated using the ratio between the length L of the baseline for the range of 165 ppm to 185 ppm and the length L' of the perpendicular line from the peak top to the baseline. Thus, it can be concluded that the broad peak is present when the ratio L'/L is greater than or equal to 0.1. This ratio L'/L may be greater than or equal to 0.2, greater than or equal to 0.3, greater than or equal to 0.4, or greater than or equal to 0.5. While the upper limit for the ratio L'/L is not particularly limited, in general it should be less than or equal to 3.0 and may be less than or equal to 2.0 or less than or equal to 1.0.

The structure of the aforementioned glucopyranose ring can also be determined by analysis based on the methodology described in Sustainable Chem. Eng. 2020, 8, 48, 17800-17806.

The nanocellulose in the present invention is an assembly of single unit fibers. When the nanocellulose in the present invention contains carboxylated CNF, it may contain at least one carboxylated CNF, and the carboxylated CNF is preferably a main component. Here, when the carboxylated CNF is a main component, it means that the proportion of carboxylated CNF with respect to a total amount of CNF is more than 50 mass%, preferably more than 70 mass%, and more preferably more than 80 mass%. Although the upper limit of the proportion is 100 mass%, it may be 98 mass% or 95 mass%.

The average fiber length of the nanocellulose in the present invention is preferably 100 nm or more and 700 nm or less. The average fiber width of the nanocellulose in the present invention is preferably 1.0 nm or more and 5.0 nm or less.

**The** average fiber length is more preferably in a range of 100 nm or more and 600 nm or less, and still more preferably in a range of 100 nm or more and 400 nm or less. When the average fiber length exceeds 700 nm, the slurry will thicken significantly and become difficult to handle. In addition, when the average fiber length is less than 100 nm, it becomes difficult for it to exhibit the viscosity, which is a feature of nanocellulose.

The average fiber width is more preferably in a range of 2.0 nm or more and 5.0 nm or less, still more preferably in a range of 2.0 nm or more and 4.5 nm or less, and yet more preferably in a range of 2.5 nm or more and 4.0 nm or less. When the average fiber width is less than 1.0 nm, it becomes difficult to improve the strength of the resin containing nanocellulose. In addition, when the average fiber width is larger than 5.0 nm, similarly, it becomes difficult to improve the strength due to stress concentration.

Here, when nanocellulose and water are mixed so that nanocellulose concentration is approximately 1 to 10 ppm, a sufficiently diluted nanocellulose aqueous dispersion is naturally dried on a mica substrate, the shape of nanocellulose is observed using a scanning probe microscope, and an arbitrary number of fibers are randomly selected from the obtained image, the average fiber length and the average fiber width are values calculated by setting circumference length of shape image-2=fiber length, and cross-sectional height of shape image=fiber width. Image processing software can be used to calculate such an average fiber width and average fiber length. In this case, image processing conditions are arbitrary, but values calculated for the same image may differ depending on image processing conditions. The range of difference in values depending on image processing conditions is preferably within a range of $\pm 100$ nm for the average fiber length. The range of difference in values depending on conditions is preferably within a range of $\pm 10$ nm for the average fiber width. A more detailed measurement method follows the method described in examples to be described below.

As will be described below, the method of producing the resin composition of the present invention may include, as necessary, a step of adding a metallic soap, an amine or quaternary ammonium for precipitation. Thereby, at least some of the nanocellulose is modified with a metallic soap, an amine or quaternary ammonium. In addition, when the resin composition of the present invention is produced, if nanocellulose that reacts with a metallic soap, an amine or quaternary ammonium in advance is used, at least some of the nanocellulose may be modified with a metallic soap, an amine or quaternary ammonium.

Therefore, one preferable form of the resin composition of the present invention contains nanocellulose in which at least some of the nanocellulose is modified with a metallic soap, an amine or quaternary ammonium.

It is thought that, when a metallic soap, an amine or quaternary ammonium salt compound reacts with carboxy groups on the surface of nanocellulose, the nanocellulose is modified, the hydrophobicity of nanocellulose is improved, and the affinity with respect to ethylenically unsaturated monomers and resins is improved.

Metallic soaps that modify nanocellulose are not particularly limited, and examples thereof include metal salts of long-chain fatty acids such as magnesium salts of long-chain fatty acids, calcium salts of long-chain fatty acids, and zinc salts of long-chain fatty acids; and mixtures of calcium salts of long-chain fatty acids and zinc salts of long-chain fatty acids, and lead-based metallic soaps, and among these, metal salts of long-chain fatty acids are preferable. In addition, the metal salts of long-chain fatty acids are preferably polyvalent metal salts of long-chain fatty acids. Examples of long-chain fatty acids include butyric acid, valeric acid, caproic acid, enanthic acid, caprylic acid, pelargonic acid, capric acid, lauric acid, myristic acid, pentadecyl acid, palmitic acid, isostearic acid, stearic acid, oleic acid, linoleic acid, ricinoleic acid, octylic acid, arachidic acid, arachidonic acid, behenic acid, lignoceric acid, and montanic acid. As the metallic soap, magnesium stearate, a mixture of calcium stearate and zinc stearate, or a lead-based hot metallic soap is more preferable. These metallic soaps may be used alone or two or more thereof may be used in combination.

As the metallic soap, a commercially available product containing the above metallic soap may be used, and examples of commercially available products include RZ-161, RZ-162, MDZ-CP-102, FTZ-111, SCI-HSA-M1, SAK-CS-P, SAK-CS-G, SAK-CS-P-1/USP, SAK-CS-PPT, SAK-CS-GPT-1, SAK-CS-POF, SAK-CS-PLB, SAK-CS-PC, SAK-ZS-P, SAK-ZS-TB, SAK-ZS-PLB500, SAK-ZS-TPS, SAK-ZS-TBPS, SAK-MS-P, SAK-MS-P/USP, SCI-HCS, SCI-HCS-SG, SCI-HCS-AB, SCI-HZS, SCI-HMS, SCI-ZNB, SAK-NAS-P, SAK-KS-CP, SAK-ZL-P, SCI-LIS, and FerricStearate83X (commercially available from Sun-Ace Co., Ltd.), LHR-200 series, LHR-300 series, and LHR-400 series (commercially available from Sakai Chemical Industry Co., Ltd.), and HT- series, PSL series, SR series, and TR series (commercially available from Nitto Chemical Industry Co., Ltd.).

Amines that modify nanocellulose are not particularly limited, and may be any of primary, secondary, and tertiary amines. The number of carbon atoms in the hydrocarbon group or aromatic group bonded to nitrogen atoms of the amine or quaternary ammonium salt compound (if two or more hydrocarbon groups or aromatic groups are bonded to nitrogen atoms, the total number of carbon atoms) is not particularly limited, and may be selected from 1 to 100 carbon atoms. As the amine, those having a polyalkylene oxide structure such as an ethylene oxide/propylene oxide (EO/PO) copolymer moiety may be used. In order to impart sufficient hydrophobicity to nanocellulose, the number of carbon atoms is preferably 3 or more and more preferably 5 or more.

Quaternary ammonium salt compounds that modify nanocellulose are not particularly limited. Specific examples of quaternary ammonium salt compounds include quaternary ammonium hydroxides such as tetrabutylammonium hydroxide, quaternary ammonium chlorides such as tetrabutylammonium chloride, quaternary ammonium bromides such as tetrabutylammonium bromide, and quaternary ammonium iodides such as tetrabutylammonium iodide.

Nanocellulose reacted with a metallic soap, an amine or quaternary ammonium salt compound functions as a dispersant in the process of polymerizing ethylenically unsaturated monomers. Thereby, it is possible to omit use of an emulsifier in the process of polymerizing ethylenically unsaturated monomers. Not using an emulsifier is advantageous in terms of workability because no foaming occurs when the obtained resin composition is dried.

[Method of Producing Nanocellulose]

Next, the method of producing nanocellulose will be described. The nanocellulose in the present invention can be produced by, for example, a method including a process A of oxidizing a cellulose raw material by a hypochlorous acid or its salts to obtain oxidized cellulose and a process B of fibrillating the oxidized cellulose.

(Step A: Production of oxidized cellulose)

The cellulose raw material should be a material that is mainly cellulose, but is not otherwise particularly limited, and can be exemplified by pulp, natural cellulose, regenerated cellulosed, and microfine celluloses provided by depolymerizing a cellulose by mechanical treatment. A commercial product, e.g., crystalline cellulose sourced from pulp, can be used as such as the cellulose raw material. Otherwise, unused biomass containing large amounts of a cellulose component, e.g., soy pulp or soybean skin, may be used as a raw material. The cellulose raw material may be pretreated with an alkali at a suitable concentration with the goal of facilitating permeation of the oxidant used into the starting pulp.

The hypochlorous acid or salt thereof used to oxidize the cellulose raw material can be exemplified by an aqueous hypochlorous acid, sodium hypochlorite, potassium hypochlorite, calcium hypochlorite, and ammonium hypochlorite. Among these, sodium hypochlorite is preferred from the standpoint of ease of handling.

Methods for producing the oxidized cellulose by the oxidation of a cellulose raw material can be exemplified by a method in which the cellulose raw material is mixed with a reaction solution that contains a hypochlorous acid or a salt thereof. The solvent in the reaction solution is preferably water from the standpoint of ease of handling and from the standpoint of impeding secondary reactions. The available chlorine concentration in the reaction solution of the hypochlorous acid or salt thereof is preferably 6 to 43 mass%, more preferably 7 to 43 mass%, still more preferably 10 to 43 mass%, and even more preferably 14 to 43 mass%. When the available chlorine concentration in the reaction solution is in the indicated range, the carboxy group content in the oxidized cellulose can then be satisfactorily high and fibrillation of the oxidized cellulose can be easily performed when nanocellulose production is carried out.

From the standpoint of providing a satisfactorily high carboxy group content in the oxidized cellulose, the available chlorine concentration in the reaction solution is more preferably at least 15 mass%, still more preferably at least 18 mass%, and even more preferably at least 20 mass%. Moreover, based on a consideration of inhibiting excessive decomposition of the cellulose during fibrillation, the available chlorine concentration of the reaction solution is more preferably not more than 40 mass% and still more preferably not more than 38 mass%. Ranges for the available chlorine concentration of the reaction solution can be established by suitable combinations of these upper limits and lower limits. The range for this available chlorine concentration is more preferably 16 to 43 mass% and still more preferably 18 to 40 mass%.

The available chlorine concentration of a hypochlorous acid or salt thereof is defined as follows. The hypochlorous acid is a weak acid occurring as the aqueous solution, and hypochlorites are compounds in which the hydrogen of the hypochlorous acid has been converted into another cation. For example, since sodium hypochlorite, which is a salt of the hypochlorous acid, exists in solvent (preferably in an aqueous solution), the concentration is measured as the available amount of chlorine in solution rather than the sodium hypochlorite concentration. With respect here to the available chlorine from sodium hypochlorite, the oxidizing power of the divalent oxygen atom generated by the decomposition of sodium hypochlorite corresponds to 2 atom-equivalents of monovalent chlorine, and thus the bound chlorine atom of sodium hypochlorite (NaClO) has the same oxidizing power as two atoms of nonbound chlorine ($Cl_2$) and the available chlorine = 2 × (chlorine in NaClO). In a specific measurement means, the available chlorine concentration is measured by precisely weighing the sample; adding water, potassium iodide, and acetic acid; allowing the mixture to stand; and titrating the liberated iodine with a sodium thiosulfate solution using an aqueous starch solution as indicator.

The oxidation reaction of the cellulose raw material by a hypochlorous acid or a salt thereof should be carried out while adjusting the pH into the range from 5.0 to 14.0. Within this range, the oxidation reaction of the cellulose raw material can be satisfactorily developed and the amount of carboxy group in the oxidized cellulose can be brought to satisfactorily high levels. This in turn makes it possible to readily carry out fibrillation of the oxidized cellulose. The pH of the reaction system is more preferably greater than or equal to 7.0 and still more preferably greater than or equal to 8.0. The upper limit on the pH of the reaction system is more preferably less than or equal to 13.5 and still more preferably less than or equal to 13.0. The pH range for the reaction system is more preferably 7.0 to 14.0 and still more preferably 8.0 to 13.5.

The method for producing the oxidized cellulose is further described in the following for the example of the use of a hypochlorous acid or sodium hypochlorite as the salt thereof.

When oxidation of the cellulose raw material is carried out using sodium hypochlorite, the reaction solution is then preferably an aqueous sodium hypochlorite solution. The procedure for adjusting the available chlorine concentration of the aqueous sodium hypochlorite solution to the target concentration (for example, a target concentration of 6 mass% to 43 mass%) can be exemplified by the following: concentration of an aqueous sodium hypochlorite solution that has a lower available chlorine concentration than the target concentration; dilution of an aqueous sodium hypochlorite solution that has a higher available chlorine concentration than the target concentration; and dissolution of crystalline sodium hypochlorite (for example, sodium hypochlorite pentahydrate) in solvent. Among these, adjustment to the available chlorine concentration serving as the oxidant by dilution of an aqueous sodium hypochlorite solution or dissolution of crystalline sodium hypochlorite in solvent is preferred because there is then little autodecomposition (i.e., little decline in the available chlorine concentration) and because the available chlorine concentration may be easily adjusted.

There are no particular limitations on the method for mixing the cellulose raw material with the aqueous sodium hypochlorite solution, but, viewed from the perspective of ease of operation, mixing is preferably performed by adding the cellulose raw material to the aqueous sodium hypochlorite solution.

In order to efficiently develop the oxidation reaction of the cellulose raw material, the cellulose raw material + aqueous sodium hypochlorite solution mixture is preferably stirred during the oxidation reaction. The stirring method can be exemplified by the use of a magnetic stirrer, stir bar, stirring blade-equipped stirrer (ThreeOne Motor), homomixer, dispersing-type mixer, homogenizer, external circulation mixer, and so forth. Among these, and based on considerations of smoothly carrying out the oxidation reaction of the cellulose raw material and ease of adjusting the degree of polymerization of the oxidized cellulose to or below a prescribed value, a method using one or two or more selections from shear-based stirrers, e.g., homomixers, homogenizers, and so forth, stirring blade-equipped stirrers, and dispersing-type mixers is preferred, while a method using a stirring blade-equipped stirrer is particularly preferred. When a stirring blade-equipped stirrer is used, a device provided with known stirring blades, e.g., propeller blades, paddle blades, turbine blades, and so forth, can be used as the stirrer. When a stirring blade-equipped stirrer is used, stirring is preferably performed at a rotation rate of 50 to 300 rpm.

The reaction temperature in the oxidation reaction is preferably 15°C to 100°C and is more preferably 20°C to 90°C. The pH in the reaction system declines during the reaction accompanying the production of the carboxy group in the cellulose raw material due to the oxidation reaction. Due to this, and from the standpoint of bringing about an efficient development of the oxidation reaction, preferably a base (for example, sodium hydroxide) or an acid (for example, hydrochloric acid) is added to the reaction system to adjust the pH of the reaction system into the preferred range indicated above. The reaction time for the oxidation reaction can be established in accordance with the degree of development of the oxidation, but about 15 minutes to 50 hours is preferred. When the pH of the reaction system is made greater than or equal to 10, preferably the reaction temperature is set to 30°C or above and/or the reaction time is set to at least 30 minutes.

The zeta potential and light transmittance of the nanocellulose can be adjusted to desired values by adjusting, e.g., the reaction time, reaction temperature, and stirring conditions for the oxidation reaction. Specifically, as the reaction time is lengthened and/or the reaction temperature is increased, oxidation at the cellulose microfibril surface in the cellulose raw material is more extensively developed, and a trend is set up whereby the average fiber width becomes smaller due to a strengthening of the repulsion between the fibrils due to electrostatic repulsion and osmotic pressure. In addition, the zeta potential can be increased by establishing at least one selection from the oxidation reaction time, oxidation reaction temperature, and oxidation stirring conditions on the side that brings about a greater development of oxidation (i.e., the side that causes an increase in the degree of oxidation) (for example, the reaction time can be lengthened).

An oxidized cellulose, comprising an oxide of the cellulose raw material by a hypochlorous acid or a salt thereof, can be obtained by subjecting the solution containing the oxidized cellulose yielded by the aforementioned reaction, to a known separation process, e.g., filtration, and as necessary to additional purification. The oxidized cellulose-containing solution yielded by the aforementioned reaction may be supplied as such to the fibrillation treatment.

When the pH of the oxidized cellulose-containing solution has been brought to 4.0 or below for the separation process, in order to improve the handling characteristics when provided to the ensuing fibrillation treatment, at least a portion of the carboxy groups can be converted to the salt form (-COO⁻ $X^+$ : $X^+$ indicates a cation, e.g., sodium, potassium, and lithium), for example, by bringing the pH to 6.0 or higher by the addition of a base. In addition, the oxidized cellulose-containing solution may be converted into an oxidized cellulose-containing composition, for example, by replacing the solvent in the former. At least a portion of the carboxy groups can also be converted into the salt form (-COO⁻ $X^+$ : $X^+$ indicates a cation, e.g., sodium, potassium, and lithium) in the oxidized cellulose-containing composition, for example, by establishing alkaline conditions of 10 or higher for the pH.

In addition, the method of producing oxidized cellulose may further include a process of mixing the obtained oxidized cellulose with a compound having a modifying group. The compound having a modifying group is not particularly limited as long as it is a compound having a modifying group that can form an ionic bond or covalent bond with the carboxy group or hydroxyl group of the oxidized cellulose, and the above metallic soap, amine, and quaternary ammonium salt compound may be exemplified.

In accordance with the preceding, the oxidized cellulose encompasses the embodiments represented by the salt forms, proton forms, and modified forms as provided by a modifying group. The nanocellulose obtained from the present oxidized cellulose also encompasses the embodiments represented by the salt forms, proton forms, and modified forms as provided by a modifying group.

(Step B: Fibrillation treatment)

The nanocellulose in the present invention can be obtained by carrying out fibrillation and nanosizing of the oxidized cellulose obtained as described above. The method of fibrillating the oxidized cellulose can be exemplified by methods that execute weak stirring using, for example, a magnetic stirrer, and by methods that perform a mechanical fibrillation. Fibrillation of the oxidized cellulose is preferably carried out using a mechanical treatment because this enables a satisfactory fibrillation of the oxidized cellulose to be carried out and enables a shortening of the fibrillation time to be devised. Here, nanocellulose (also referred to as "nanocellulose") is a general term for the products provided by the nanosizing of cellulose and encompasses, e.g., cellulose nanofiber, cellulose nanocrystals, and so forth.

The method for carrying out mechanical fibrillation can be exemplified by methods that use various mixers or stirring devices, such as, for example, screw mixers, paddle mixers, dispersing mixers, turbine mixers, high-speed homomixers, high-pressure homogenizers, ultrahigh-pressure homogenizers, double cylinder homogenizers, ultrasonic homogenizers, water-current counter-collision dispersers, beaters, disk refiners, conical refiners, double disk refiners, grinders, single-screw kneaders, multi-screw kneaders, planetary centrifugal mixers, and vibrating agitators. A single one of these devices may be used by itself or a combination of two or more of these devices may be used, and preferably nanocellulose production is carried out by nanosizing the oxidized cellulose by treating the oxidized cellulose in a dispersion medium.

From the standpoint of being able to produce nanocellulose in which fibrillation is more advanced, fibrillation of the oxidized cellulose can preferably use a method that employs an ultrahigh-pressure homogenizer. When a fibrillation treatment using an ultrahigh-pressure homogenizer is performed, the pressure during the fibrillation treatment is preferably at least 100 MPa, more preferably at least 120 MPa, and still more preferably at least 150 MPa. The number of times the fibrillation treatment is carried out is not particularly limited, but, from the standpoint of achieving a satisfactory development of the fibrillation, the fibrillation treatment is preferably carried out at least two times and more preferably at least three times. In addition, the aforementioned oxidized cellulose can also be satisfactorily fibrillated by mild stirring using, for example, a planetary centrifugal mixer or a vibrating mixer. A vortex mixer (touch mixer) is an example of a vibrating mixer. That is, a homogenized nanocellulose can also be obtained from the aforementioned oxidized cellulose when the fibrillation treatment is carried out using mild fibrillation conditions.

The fibrillation treatment is preferably carried out in a state in which the abovementioned oxidized cellulose is mixed with a dispersion medium. This dispersion medium is not particularly limited and can be selected as appropriate in accordance with the objectives. Specific examples of the dispersion medium are water, alcohols, ethers, ketones, N,N-dimethylformamide, N,N-dimethylacetamide, and dimethyl sulfoxide. A single one of these may be used by itself as the solvent or two or more may be used in combination.

Of the dispersion media referenced above, the alcohols can be exemplified by methanol, ethanol, isopropanol, isobutanol, sec-butyl alcohol, tert-butyl alcohol, methyl cellosolve, ethylene glycol, and glycerol. The ethers can be exemplified by ethylene glycol dimethyl ether, 1,4-dioxane, and tetrahydrofuran. The ketones can be exemplified by acetone and methyl ethyl ketone.

Isolation of the oxidized cellulose, and of the nanocellulose yielded by its fibrillation, is facilitated by the use of an organic solvent as the dispersion medium in the fibrillation treatment. Since nanocellulose dispersed in organic solvent is then obtained, mixing with, e.g., resin soluble in the organic solvent or monomer that is a starting material for such a resin, is facilitated. The nanocellulose dispersion provided by dispersing nanocellulose yielded by fibrillation in a dispersion medium of water and/or organic solvent, can be used for mixing with various components, e.g., resins, rubbers, solid particles, and so forth.

[Polymer of Ethylenically Unsaturated Monomer]

The type of ethylenically unsaturated monomers in the present invention is not particularly limited, and can be selected depending on desired particle properties, the type of the resin to be modified and the like. An ethylenically unsaturated monomer is a compound having at least one ethylene group. Ethylenically unsaturated monomers may be used alone or two or more thereof may be used in combination. The polymer of the ethylenically unsaturated monomer is a reaction product obtained according to a polymerization reaction of ethylenically unsaturated monomers.

Specific examples of ethylenically unsaturated monomers include (meth)acrylic acid, alkyl (meth)acrylate, alkylene glycol (meth)acrylate, (meth)acrylonitrile, vinyl halide, maleic acid imide, phenylmaleimide, (meth)acrylamide, styrene, $\alpha$-methyl styrene, and vinyl acetate. Among these, at least one selected from the group consisting of alkyl (meth)acrylate and styrene is preferable.

Examples of alkyl (meth)acrylates include those having 1 to 10 carbon atoms in an alkyl moiety. The alkyl moiety may be linear, branched, or cyclic, and may be unsubstituted or may have a substituent.

The ethylenically unsaturated monomers may have functional groups such as a carboxy group, a hydroxyl group, an epoxy group, an amino group, an amide group, and a cyano group. Having these functional groups improves the affinity with respect to cellulose nanofibers. On the other hand, in consideration of preventing emulsification and dispersion from becoming difficult and polymerization from becoming unstable, the proportion of ethylenically unsaturated monomers having these functional groups is not particularly limited, but it may be 5 mol% or less, 3 mol% or less or 1 mol% or less of the total amount of ethylenically unsaturated monomers.

The polymer of the ethylenically unsaturated monomer in the present invention may have a functional group. For the polymer having a functional group, a functional group may be introduced into the polymer by polymerizing ethylenically unsaturated monomers having the above functional group, or a functional group may be introduced by inducing an ethylenically unsaturated monomer in the polymer such as vinyl acetate into a functional group.

The weight-average molecular weight of the polymer of the ethylenically unsaturated monomer is not particularly limited, and may be, for example, 5,000 to 3,000,000. When the weight-average molecular weight of the particle polymer is 5,000 or more, a decrease in strength of the resin is minimized, and when the weight-average molecular weight of the particles is 3,000,000 or less, the particles melt easily in the resin and a sufficient modification effect tends to be obtained.

The weight-average molecular weight (Mw) of the polymer of the ethylenically unsaturated monomer can be specifically measured by the following method.

The weight-average molecular weight of the polymer of the ethylenically unsaturated monomer is measured using gel permeation chromatography (GPC, for example, HLC-8220, commercially available from Tosoh Corporation). Specifically, an appropriate solvent is added to a resin composition containing nanocellulose and a polymer of an ethylenically unsaturated monomer to dissolve the polymer. Then, filtration is performed using a 0.45 $\mu$m filter, and the obtained solution is measured in terms of polystyrene.

In order to improve impact resistance, ethylenically unsaturated monomers preferably contain a rubber component, and examples thereof include a rubber-modified styrene resin. The rubber-modified styrene resin is generally obtained by polymerizing or copolymerizing (hereinafter referred to as "(co)polymerization" in some cases) a monomer mixture containing styrene monomers and as necessary, vinyl monomers (that is, monomers other than the styrene monomers) that are copolymerizable therewith in the presence of a rubbery polymer, for example, by a method such as bulk polymerization, bulk suspension polymerization, solution polymerization, precipitation polymerization or emulsion polymerization. The rubber-modified styrene resin may be any of a graft (co)polymer in which (co)polymers containing styrene monomers are grafted onto rubbery polymers and an ungrafted (co)polymer in which (co)polymers containing styrene monomers are ungrafted into rubbery polymers.

Specific examples of rubber-modified styrene resins include impact resistant polystyrene, ABS resins (acrylonitrile-butadiene rubber-styrene copolymer), AAS resins (acrylonitrile-acrylic rubber-styrene copolymer), MBS resins (methyl methacrylate-butadiene rubber-styrene copolymer), and AES resins (acrylonitrile-ethylene propylene rubber-styrene copolymer). One type of these may be contained alone or a combination of two or more thereof may be contained.

The rubber-modified styrene resin is preferably a resin containing, with respect to 5 to 80 mass% of rubbery polymers, 5 to 100 parts by weight of a graft (co)polymer obtained by graft polymerizing 95 to 20 mass% of a monomer mixture containing styrene monomers and other copolymerizable vinyl monomers, and 0 to 95 parts by weight of a styrene (co)polymer obtained by polymerizing a monomer mixture containing styrene monomers and other copolymerizable vinyl monomers.

The rubbery polymer is preferably a rubbery polymer having a glass transition temperature of 0°C or lower. Examples of rubbery polymers include diene rubbers such as polybutadiene, styrene-butadiene copolymers, acrylonitrile-butadiene copolymers, styrene-butadiene block copolymers, and butyl acrylate-butadiene copolymers, acrylic rubbers such as polybutyl acrylate, polyisoprene, ethylene-olefin copolymers, ethylene-unsaturated carboxylic acid ester copolymers, ethylene-fatty acid vinyl copolymers, and ethylene-propylene-diene ternary copolymers. These may be used alone or two or more thereof may be used in combination. Among these, polybutadiene or butadiene copolymers are preferable.

Examples of styrene monomers include styrene and styrene substituted with an alkyl group having 1 to 4 carbon atoms. Examples of styrene monomers substituted with an alkyl group having 1 to 4 carbon atoms include $\alpha$-methyl styrene, p-methyl styrene, m-methyl styrene, o-methyl styrene, p-ethyl styrene, m-ethyl styrene, o-ethyl styrene, and t-butyl styrene.

The rubber-modified styrene resin may contain monomers other than styrene monomers. As the monomers other than styrene monomers, in order to improve the impact resistance, chemical resistance, and plating properties of the resin, vinyl cyanide monomers are preferably used. In addition, in order to improve the toughness and color tone of the resin, (meth)acrylic acid ester monomers are preferably used. Examples of vinyl cyanide monomers include acrylonitrile, methacrylonitrile, and ethacrylonitrile, and among these, acrylonitrile is preferable. Examples of (meth)acrylic acid ester monomers include methyl, ethyl, propyl, n-butyl, and isobutyl esters of acrylic acid and methacrylic acid, and among these, methyl methacrylate is preferable.

In addition, as necessary, other vinyl monomers, for example, aromatic vinyl monomers other than styrene monomers such as vinyl toluene, and maleimide monomers such as maleimide, N-methylmaleimide, and N-phenylmaleimide can be used.

In order to improve the impact resistance of the resin composition, in the monomer or monomer mixture used in the graft (co)polymer described above, the proportion of styrene monomers is preferably 5 to 90 mass%, and more preferably 10 to 80 mass%. When vinyl cyanide monomers are mixed, in consideration of molding processability of the resin composition, the proportion of vinyl cyanide monomers is preferably 1 to 50 mass% and particularly, more preferably 40 wt% or less. When plating adhesiveness is particularly required, if the proportion of vinyl cyanide monomers is in a range of 25 to 40 mass%, it is possible to improve a catalyst adsorption ability in the catalyst process during a plating treatment, and thus the monomers are preferably used. In addition, when (meth)acrylic acid ester monomers are mixed, in consideration of toughness and impact resistance, 80 mass% or less of (meth)acrylic acid ester monomers is preferably used, and 75 mass% or less thereof is particularly preferably used. The total blended amount of aromatic vinyl monomers, vinyl cyanide monomers and (meth)acrylic acid ester monomers in the monomer or monomer mixture is preferably 95 to 20 mass% and more preferably 90 to 30 mass%.

In consideration of impact resistance of the resin composition, regarding the mixing ratio between the rubbery polymer and the monomer mixture when a graft (co)polymer is obtained, the proportion of the rubbery polymer in 100 mass% of all graft (co)polymers is preferably 5 mass% or more and more preferably 10 mass% or more. In addition, in consideration of impact resistance of the resin composition and the appearance of the molded article, the proportion is preferably 80 mass% or less and more preferably 70 mass% or less. In addition, the mixing proportion of the monomer or monomer mixture is preferably 95 mass% or less and more preferably 90 mass% or less, or preferably 20 mass% or more and more preferably 30 mass% or more.

The graft (co)polymer can be obtained by a known polymerization method. For example, it can be obtained by a method in which, in the presence of a rubbery polymer latex, a mixture containing monomers and a chain transfer agent and a solution of a radical generating agent dissolved in an emulsifier are continuously supplied to a polymerization container and emulsion polymerization is performed.

The graft (co)polymer may contain an ungrafted (co)polymer in addition to a graft (co)polymer having a structure in which a monomer or a monomer mixture is grafted onto a rubbery polymer. The graft ratio of the graft (co)polymer is not particularly limited, and may be generally 20 to 80% or in a range of 25 to 50%. Here, the graft ratio is a value calculated by the following formula.

graft ratio (%)=[<amount of vinyl copolymers that are graft-polymerized into rubbery

polymers>/<rubber content of graft copolymer>]×100

Properties of the ungrafted (co)polymer are not particularly limited, and the intrinsic viscosity [η] (measured at 30°C) of a methyl ethyl ketone soluble portion that is 0.25 to 1.00 dl/g, and particularly in a range of 0.25 to 0.80 dl/g, is a preferable condition for obtaining a resin composition with excellent impact resistance.

A styrene copolymer obtained by copolymerizing maleimide monomers, that is, a maleimide group-modified styrene copolymer, is used by being contained in the polystyrene resin, and thus it is possible to improve heat resistance of the resin composition, and it is also possible to specifically improve flame retardance so that the styrene copolymer can be preferably used.

In consideration of impact resistance of the resin composition, the proportion of styrene monomers as a component constituting the styrene (co)polymer with respect to all monomers is preferably 5 to 90 mass% and more preferably in a range of 10 to 80 mass%. In consideration of impact resistance and fluidity, when vinyl cyanide monomers are mixed, the proportion thereof is preferably 1 to 50 mass% and more preferably in a range of 40 mass% or less. When plating adhesiveness is particularly required, if the proportion of vinyl cyanide monomers is in a range of 25 to 40 mass%, it is possible to improve a catalyst adsorption ability in the catalyst process during a plating treatment, and thus the monomers are preferably used. In addition, in consideration of toughness and impact resistance, when (meth)acrylic acid ester monomers are mixed, the proportion thereof is preferably 80 mass% or less and more preferably in a range of 75 mass% or less. In addition, when other vinyl monomers that are copolymerizable therewith are mixed, the proportion thereof is preferably 60 mass% or less and particularly preferably in a range of 50 mass% or less.

Properties of the styrene (co)polymer are not limited, and the intrinsic viscosity [η] measured at 30°C using a methyl ethyl ketone solvent that is 0.25 to 5.00 dl/g, and particularly in a range of 0.35 to 3.00 dl/g is preferable because a resin composition having excellent impact resistance and molding processability can be obtained.

A method of producing a styrene (co)polymer is not particularly limited, and conventional methods such as a bulk polymerization method, a suspension polymerization method, an emulsion polymerization method, a solution polymerization method, a bulk-suspension polymerization method and a solution-bulk polymerization method can be used.

Polyvinyl alcohol can be used as the polymer of the ethylenically unsaturated monomer in the present invention. The polyvinyl alcohol in this specification is a polymer obtained by saponifying a polyvinyl ester obtained by polymerizing a vinyl ester that is an ethylenically unsaturated monomer. Examples of vinyl esters include vinyl formate, vinyl acetate, vinyl propionate, vinyl valerate, vinyl laurate, vinyl stearate, vinyl benzoate, vinyl pivalate, and vinyl versatate, and among these, vinyl acetate is preferable.

When vinyl ester is polymerized, as necessary, other copolymerizable monomers can be copolymerized within a range in which the effects of the invention are not impaired. Examples of monomers that are copolymerizable with such vinyl esters include olefins having 2 to 30 carbon atoms such as ethylene, propylene, 1-butene, and isobutene; acrylic acid and its salts; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and its salts; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives such as acrylamide, N-methylacrylamide, N-ethylacrylamide, N,N-dimethylacrylamide, diacetoneacrylamide, acrylamidopropyl dimethylamine and its salts, N-methylol acrylamide and its derivatives; methacrylamide derivatives such as methacrylamide, N-methylmethacrylamide, N-ethylmethacrylamide, methacrylamidopropyldimethylamine and its salts, N-methylol methacrylamide and its derivatives; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid and its salts or its esters; itaconic acid and its salts or its esters; vinyl silyl compounds such as vinyltrimethoxysilane; isopropenyl acetate; dihydroxybutene derivatives; vinyl ethyl carbonate; and 3,4-diacetoxy-1-butene, and 3,4-diethoxy-1-butene. The copolymerization proportion of these copolymerizable monomers is preferably 15 mol% or less and more preferably 10 mol% or less. The lower limit value is preferably 0.01 mol% or more, and more preferably 0.05 mol% or more. In addition, the polyvinyl alcohol may be other modified products.

Examples of modified polyvinyl alcohol products include a polyvinyl acetal resin. The polyvinyl acetal resin is obtained by acetalizing polyvinyl alcohol. Specific examples of polyvinyl acetal resins include polyvinyl formal, polyvinyl acetoacetal, polyvinyl propyral, and polyvinyl butyral.

The lower limit of the degree of saponification of polyvinyl alcohol is preferably 70 mol%, and more preferably 80 mol%. The upper limit of the degree of saponification of polyvinyl alcohol may be 100 mol% or less or 99.8 mol% or less.

The lower limit of the degree of polymerization of polyvinyl alcohol is preferably 500 and more preferably 1,000.

The upper limit of the degree of polymerization of polyvinyl alcohol is preferably 8,000 and more preferably 4,000. When polyvinyl alcohol having a degree of saponification and a degree of polymerization within the above ranges is used, a sufficient strength tends to be imparted.

Here, the degree of saponification is a value measured according to a JIS-K-6726:1994 test method. The degree of polymerization (Po) is a value measured according to a JIS-K-6726:1994 test method, and a value obtained by the following formula from the intrinsic viscosity [$\eta$] (dl/g) measured in water at 30°C after resaponification and purification of polyvinyl alcohol.

$$Po= ([\eta]\times 103/8.29)\ (1/0.62)$$

As the polyvinyl alcohol, commercially available products can be used. As commercially available polyvinyl alcohols, for example, Kuraray Poval (registered trademark), Exceval (registered trademark), ELVANOL (registered trademark), and MOWIFLEX (registered trademark) (commercially available from Kuraray Co., Ltd.) and Gohsenol (registered trademark), Gohsenx (registered trademark), and Nichigo G-Polymer (registered trademark) (commercially available from Mitsubishi Chemical Corporation) can be used.

As the polyvinyl acetal resin that is a modified polyvinyl alcohol product, for example, S-LEC (registered trademark) (commercially available from Sekisui Chemical Co., Ltd.) and VINYLEC (registered trademark) (commercially available from JNC) can be used.

When polyvinyl alcohol is included as the polymer of the ethylenically unsaturated monomer in the present invention, various additives, for example, a plasticizer, a surfactant, and a cross-linking agent, can be mixed. Here, the plasticizer is preferably polyhydric alcohol, and examples thereof include ethylene glycol, glycerin, diglycerin, propylene glycol, diethylene glycol, triethylene glycol, tetraethylene glycol, and trimethylolpropane, and one of these can be used or two or more thereof can be used in combination. The content of the plasticizer is not particularly limited, and may be in a range of 1 to 30 parts by mass with respect to polyvinyl alcohol.

Examples of surfactants include anionic surfactants, nonionic surfactants, cationic surfactants, and amphoteric surfactants. Examples of anionic surfactants include carboxylic acid forms such as potassium laurate; sulfuric acid ester forms such as octyl sulfate; sulfonic acid forms such as dodecylbenzenesulfonate and sodium alkylbenzenesulfonate; and polyoxyethylene lauryl ether phosphate monoethanolamine salts, octyl phosphate potassium salts, lauryl phosphate potassium salts, stearyl phosphate potassium salts, octyl ether phosphate potassium salts, dodecyl phosphate sodium salts, tetradecyl phosphate sodium salts, dioctyl phosphate sodium salts, trioctyl phosphate sodium salts, polyoxyethylene arylphenyl ether phosphate potassium salts, and polyoxyethylene aryl phenyl ether phosphate ester amine salts. Examples of nonionic surfactants include alkyl ether forms such as polyoxyethylene oleyl ether and polyoxyethylene lauryl ether; alkylphenyl ether forms such as polyoxyethylene octylphenyl ether; alkyl ester forms such as polyoxyethylene laurate; alkylamine forms such as polyoxyethylene lauryl amino ether; alkylamide forms such as polyoxyethylene laurylamide; polypropylene glycol ether forms such as polyoxyethylene polyoxypropylene ether; alkanolamide forms such as oleic acid diethanolamide; and allyl phenyl ether forms such as polyoxyalkylene allyl phenyl ether. Examples of cationic surfactants include amines such as laurylamine hydrochloride; quaternary ammonium salts such as lauryltrimethylammonium chloride; and pyridium salts such as lauryl pyridinium chloride. In addition, examples of amphoteric surfactants include N-alkyl-N,N-dimethylammonium betaine. One of surfactants can be used or two or more thereof can be used in combination. The content of the surfactant with respect to PVA is preferably 0.01 to 7 parts by mass and more preferably 0.02 to 5 parts by mass.

The cross-linking agent is not particularly limited as long as it causes a cross-linking reaction with polyvinyl alcohol, and examples thereof include boron compounds such as boric acid, calcium borate, cobalt borate, zinc borate, potassium aluminum borate, ammonium borate, cadmium borate, potassium borate, copper borate, lead borate, nickel borate, barium borate, bismuth borate, magnesium borate, manganese borate, lithium borate, borax, kernite, inyoite, kotoite, suanite, and szaibelyite; and tripotassium citrate. Among these, the boron compound is preferable and boric acid and borax are more preferable. The content of the cross-linking agent with respect to polyvinyl alcohol is preferably 0.01 to 5 parts by mass and more preferably 0.1 to 3 parts by mass.

<Method of Producing Resin Composition>

The resin composition of the present invention can be produced by, for example, a production method including a step of polymerizing the ethylenically unsaturated monomers in the presence of nanocellulose. Here, the nanocellulose used in this production method is an oxide of a cellulose raw material by a hypochlorous acid or its salts, and is substantially free of N-oxyl compounds, and satisfies the following (I) and/or (II);

(I) the zeta potential is -30 mV or less; and

(II) the light transmittance in a mixed solution in which nanocellulose and water are mixed and which has a solid content concentration of 0.1 mass% is 95% or more.

The details of nanocellulose here are the same as those of the form of nanocellulose described in the above [Nanocellulose].

A method of polymerizing ethylenically unsaturated monomers in the presence of nanocellulose is not particularly limited. In order to efficiently obtain a resin composition, emulsion polymerization, suspension polymerization or pickering emulsion polymerization is preferable.

In addition, after the polymerization reaction, the nanocellulose and the polymer of the ethylenically unsaturated monomer can be precipitated and collected by adding a metallic soap, an amine, a quaternary ammonium or the like. Therefore, the production method of the present invention may include a step of adding a metallic soap, an amine or quaternary ammonium for precipitation after the polymerization reaction.

In addition, the resin composition of the present invention can be produced by a production method including a step of polymerizing the ethylenically unsaturated monomers in the presence of nanocellulose that has been reacted with a metallic soap, an amine or quaternary ammonium in advance.

Thereby, at least some of the nanocellulose is modified with a metallic soap, an amine or quaternary ammonium.

As a method of polymerizing ethylenically unsaturated monomers by emulsion polymerization or suspension polymerization in the presence of nanocellulose, a method of dispersing cellulose nanofibers and ethylenically unsaturated monomers in a solvent such as water and performing heating when a polymerization initiator is added may be exemplified.

As one form of the polymer of the ethylenically unsaturated monomer contained in the resin composition of the present invention, it preferably contains a rubber-modified styrene resin and more preferably contains an ABS resin. For example, when an ABS resin among rubber-modified styrene resins is exemplified, the ABS resin can be produced by a blending method of mechanically mixing a rubbery polymer and an AS resin, a grafting method of polymerizing ethylenically unsaturated monomers in the presence of a rubbery polymer, a graft-blending method of mixing a polymer obtained by a grafting method and an AS resin or the like. In the production method of the present invention, these methods can be applied. That is, in the production method of the present invention, for example, when a resin composition containing an ABS resin is produced, it can be produced by a blending method of mechanically mixing a rubbery polymer and nanocellulose with an AS resin, a grafting method of polymerizing ethylenically unsaturated monomers in the presence of a rubbery polymer and nanocellulose, a graft-blending method of mixing a polymer obtained by a grafting method, nanocellulose and an AS resin, or the like. Here, as the rubbery polymer, the same form described in the above [Polymer of Ethylenically Unsaturated Monomer] may be exemplified.

As the polymerization initiator used for polymerization of ethylenically unsaturated monomers, general polymerization initiators such as persulfate, organic peroxide, and an azo compound can be used, and persulfate is preferable because it has an excellent polymerization reaction rate and productivity, and ammonium persulfate is more preferable because the obtained resin has excellent water resistance.

Examples of persulfates include ammonium persulfate, potassium persulfate, and sodium persulfate.

Examples of organic peroxides include t-butyl hydroperoxide, cumene hydroperoxide, dicumyl peroxide, benzoyl peroxide, lauroyl peroxide, caproyl peroxide, di-i-propylperoxydicarbonate, di-2-ethylhexylperoxydicarbonate, t-butylperoxybivalate, 2,2-bis (4,4-di-t-butylperoxycyclohexyl)propane, 2,2-bis (4,4-di-t-amylperoxycyclohexyl)propane, 2,2-bis (4,4-di-t-octylperoxycyclohexyl)propane, 2,2-bis (4,4-di-$\alpha$-cumylperoxycyclohexyl)propane, 2,2-bis (4,4-di-t-butylperoxycyclohexyl)butane, and 2,2-bis (4,4-di-t-octylperoxycyclohexyl)butane.

Examples of azo compounds include 2,2'-azobis-2,4-dimethylvaleronitrile, 2,2'-azobis-i-butylnitrile, and 2,2'-azobis-4-methoxy-2,4-dimethylvaleronitrile.

The above persulfate and peroxide may be used as a redox polymerization initiator in combination with sodium bisulfite or sodium ascorbate, which is a reducing agent. The reducing agent may be appropriately selected depending on the type of persulfate or peroxide, and other reducing agents such as glucose and pyrophosphate can be used.

In addition, a chain transfer agent such as dodecanethiol may be used during the polymerization reaction.

The temperature during the polymerization reaction is not particularly limited. For example, the temperature is preferably in a range of 30°C to 180°C, and more preferably in a range of 50°C to 150°C.

The ratio of nanocellulose and ethylenically unsaturated monomers when ethylenically unsaturated monomers are polymerized in the presence of nanocellulose is not particularly limited. For example, the amount of ethylenically unsaturated monomers with respect to 100 parts by mass of nanocellulose may be 5 parts by mass to 1,000 parts by mass or 10 parts by mass to 100 parts by mass.

The polymer and nanocellulose obtained by the polymerization reaction are appropriately post-treated and collected to obtain a resin composition.

The post-treatment method is not particularly limited as long as it is a method with which a resin composition can be collected. In addition, as described above, the polymer and nanocellulose, and nanocellulose and ethylenically unsaturated monomers may be collected by precipitation according to addition of a metallic soap, an amine, a quaternary ammonium or the like. The solvent used for the polymerization reaction of ethylenically unsaturated monomers may or may not be removed. In addition, the product obtained by the polymerization reaction may be filtered and washed to form a resin composition. In addition, after the solvent used in the polymerization reaction is removed, the resin composition obtained by the method may be used by being dispersed in another solvent, and the solvent may be additionally removed by distillation, filtration or the like.

The resin composition obtained by the method may be used without change or may be molded into a desired shape (a powder, bead, or pellet shape, etc.).

In addition, the resin composition of the present invention can be obtained by oxidizing a cellulose raw material by a hypochlorous acid or its salts, mixing the obtained oxidized cellulose with a resin raw material, appropriately fibrillating and forming it into a nano size, and combining the nanocellulose and the polymer of the ethylenically unsaturated monomer. In addition, the resin composition of the present invention can be used for production of the resin composition by a user appropriately fibrillating oxidized cellulose obtained by oxidizing a cellulose raw material by a hypochlorous acid or its salts and forming it into a nano size. As described above, the resin composition of the present invention can be produced using oxidized cellulose obtained by oxidizing a cellulose raw material by a hypochlorous acid or its salts.

One production method of the present invention is a method of producing a resin composition containing nanocellulose and a polymer of an ethylenically unsaturated monomer, and the production method includes a step of stirring a first mixture containing oxidized cellulose and ethylenically unsaturated monomers to obtain a second mixture containing nanocellulose and a polymer of an ethylenically unsaturated monomer, and a step of polymerizing the ethylenically unsaturated monomers using the second mixture, and the oxidized cellulose contains an oxide of a cellulose raw material from a hypochlorous acid or its salts.

One production method of the present invention is a method of producing a resin composition containing nanocellulose and a polymer of an ethylenically unsaturated monomer, and the production method includes a step of stirring oxidized cellulose and continuously adding ethylenically unsaturated monomers to obtain a mixture containing the nanocellulose and the ethylenically unsaturated monomers and a step of polymerizing the ethylenically unsaturated monomers using the mixture, and the oxidized cellulose contains an oxide of a cellulose raw material from a hypochlorous acid or its salts.

The polymerization method here is not particularly limited, and emulsion polymerization or suspension polymerization is preferable. Aspects of specific polymerization methods, conditions and the like are the same as those in the method of producing a resin composition using nanocellulose described above.

One production method of the present invention is a method of producing a resin composition containing nanocellulose and a polymer of an ethylenically unsaturated monomer, and the production method includes a step of stirring a first mixture containing oxidized cellulose and a polymer of an ethylenically unsaturated monomer to obtain a resin composition containing nanocellulose and a polymer of an ethylenically unsaturated monomer, and the oxidized cellulose contains an oxide of a cellulose raw material from a hypochlorous acid or its salts.

One production method of the present invention is a method of producing a resin composition containing nanocellulose and a polymer of an ethylenically unsaturated monomer, and the production method includes a step of stirring oxidized cellulose and continuously adding a polymer of an ethylenically unsaturated monomer to obtain a resin composition containing the nanocellulose and the polymer of the ethylenically unsaturated monomer, and the oxidized cellulose contains an oxide of a cellulose raw material from a hypochlorous acid or its salts.

The oxidized cellulose used in the production method of the present invention may be in the form of oxidized cellulose described in the above [Nanocellulose], and specifically, it is preferably substantially free of N-oxyl compounds. In addition, the degree of polymerization of the oxidized cellulose used in the production method of the present invention is preferably 600 or less. Here, the definition of "substantially free of N-oxyl compounds", the definition of the degree of polymerization of the oxidized cellulose, its preferable form, and the like are as described in the above [Nanocellulose].

The nanocellulose in the resin composition obtained by the method of producing a resin composition of the present invention may be a form of nanocellulose described in the above [Nanocellulose].

In the present invention, "continuously adding ethylenically unsaturated monomers or a polymer of an ethylenically unsaturated monomer" means that refining of at least some of the oxidized cellulose by stirring and addition of the mixture are performed in series. Specific examples of forms in which stirring and mixture addition are performed in series include a form in which stirring and refining oxidized cellulose and addition of ethylenically unsaturated monomers or a polymer of an ethylenically unsaturated monomer are operated in one-pot; and a form in which, while oxidized cellulose is stirred, ethylenically unsaturated monomers or a polymer of an ethylenically unsaturated monomer is added at the same time, but the present invention is not limited thereto.

The forms of ethylenically unsaturated monomers or polymers thereof used in the production method of the present invention are as described in the above [Polymer of Ethylenically Unsaturated Monomer]. In addition, when the resin composition of the present invention contains a rubber-modified styrene resin, the above blending method, grafting method, and graft-blending method can be applied to the production method using oxidized cellulose. That is, when a resin composition containing an ABS resin among rubber-modified styrene resins is produced, it can be produced by, for example, a blending method of mechanically mixing a rubbery polymer and oxidized cellulose with an AS resin; a grafting method of stirring a mixture containing a rubbery polymer, ethylenically unsaturated monomers and oxidized cellulose, fibrillating at least some of the oxidized cellulose and then performing polymerization; a graft-blending method of stirring a polymer obtained by a grafting method, oxidized cellulose, and an AS resin, and fibrillating and mixing at least some of the oxidized cellulose, or the like.

In the production method of the present invention, when oxidized cellulose is stirred and at least some thereof is refined, the operation is not particularly limited as long as components constituting the nanocellulose-containing composition are dispersed, and for example, velocity fields and velocity fluctuations with arbitrary strength; collisions with inclusions and obstacles; ultrasonic waves; pressure loads; and the like can be used. A submerged dispersing machine can be preferably used for such a dispersing operation. Therefore, in one aspect of the production method of the present invention, stirring is performed by a submerged dispersing machine.

The submerged dispersing machine is not particularly limited, and for example, methods using a homomixer, a magnetic stirrer, a stirring bar, a stirrer with a stirring blade, a disper type mixer, a homogenizer, external circulation mixer, a rotation/revolution stirrer, a vibrating type stirrer, an ultrasonic dispersing machine or the like may be exemplified. In addition, as the submerged dispersing machine, in addition to the above devices, a rotary shear type stirrer, a colloid mill, a roll mill, a pressure type homogenizer, a container driven type mill, and a medium stirring mill may be exemplified. In addition, a kneader can be used as the submerged dispersing machine.

The rotary shear type stirrer is a device that performs dispersion by passing a material to be stirred through a gap between a rotor blade and an outer cylinder, and dispersion is performed with a shear flow in the gap and strong forward and backward velocity fluctuations.

The colloid mill is a device that performs dispersion with a shear flow in a gap between a rotating disk and a fixed disk. The roll mill performs dispersion with a shear force and a compression force using gaps between a plurality of rotating rollers.

The pressure type homogenizer is used as a dispersing machine that discharges a slurry or the like at a high pressure from pores, and is also called a pressure injection type dispersion instrument. The pressure type homogenizer is preferably a high pressure homogenizer. The high pressure homogenizer is, for example, a homogenizer having a function of discharging a slurry at a pressure of 10 MPa or more, preferably 100 MPa or more. Examples of high pressure homogenizers include counter-collision-type high pressure homogenizers such as a microfluidizer and a wet jet mill.

The container driven type mill is a device that performs dispersion by collision and friction of media such as balls in a container, and specific examples thereof include a rotary mill, a vibrating mill, and a planetary mill. The medium stirring mill is a device that performs dispersion with an impact force and a shear force of a medium using a medium such as a ball and a bead, and specific examples thereof include an attritor and a bead mill (sand mill).

The kneader is a device that performs an operation of wetting powder or the like with a liquid (hereinafter also referred to as kneading or blending), and specific examples thereof include a double arm kneading machine (a device that performs dispersion in two semi-cylindrical containers with twin-screw mixing blades); a banbury mixer (closed system, a dispersing device under pressure); and extrusion kneading machines such as a screw extrusion machine, a co-kneader, and an extruder.

These devices may be used alone or two or more thereof may be used in combination.

Although it is possible to proceed with refining of oxidized cellulose by stirring using such a device, stirring may be performed until components constituting the nanocellulose-containing composition are uniformized or emulsified. Thereby, nanocellulose is uniformly dispersed in the nanocellulose-containing composition, and the nanocellulose-containing composition can be obtained as an emulsion.

The resin composition containing the nanocellulose and the polymer of the ethylenically unsaturated monomer obtained by the production method using oxidized cellulose is appropriately post-treated and collected to obtain a resin composition. The post-treatment method is not particularly limited as long as the resin composition can be collected, and the resin composition may be precipitated and collected by adding a metallic soap, an amine, a quaternary ammonium or the like to a mixture containing nanocellulose and a polymer of an ethylenically unsaturated monomer. The solvent used for the polymerization reaction of ethylenically unsaturated monomers may or may not be removed. In addition, the obtained product may be filtered and washed to form a resin composition.

<Resin>

For the resin of the present invention, the resin composition of the present invention may be directly used as a resin, or it may be obtained by mixing a resin modifier and a target resin (hereinafter also referred to as a raw material resin) to be mixed with the resin modifier. The resin of the present invention contains at least the resin composition of the present invention.

The type of raw material resin is not particularly limited, and examples thereof include moldable resins such as thermoplastic resins and thermoplastic elastomers.

Examples of thermoplastic resins include rubber-modified styrene resins, acrylic resins, polyolefin, polyester, polyurethane, polystyrene, polyamide, polyvinyl chloride, and polycarbonate. The rubber-modified styrene resin is the same as that of the form described above.

Examples of thermoplastic elastomers include olefin elastomers, styrene elastomers, polyamide elastomers, polyester elastomers and polyurethane elastomers.

The raw material resin may contain the same components as those contained in the resin modifier or segments or functional groups that have favorable affinity with the resin modifier. Particularly, it is preferable that the same components as those contained in the resin modifier or segments having favorable affinity have a polymer alloy structure because effects such as impact absorption are imparted. If the affinity between the resin modifier and the resin to be mixed in is poor, the dispersibility of the obtained resin decreases, the appearance of the resin deteriorates, and breaking stress and elongation at break may decrease.

The amount of the resin modifier contained in the resin of the present invention is not particularly limited. For example, the amount of the resin modifier with respect to 100 parts by mass of the resin may be 0.1 parts by mass to 10 parts by mass.

<Polyvinyl Alcohol Film>

When the resin composition of the present invention contains polyvinyl alcohol, a polyvinyl alcohol film can be produced from the composition. The polyvinyl alcohol film of the present invention can also be called a polyvinyl alcohol sheet.

Examples of films include packaging films, optical polarizing films, phase difference films, agricultural material films (films for keeping vegetables warm and growing, etc.), water soluble films (water transfer films, packaging films for agricultural chemicals, and detergents, etc.), and oxygen barrier films.

The thickness of the film may be adjusted depending on the purpose and application, and is generally in a range of 5 to 1,000 μm.

The film is obtained using a solution containing the resin composition of the present invention by a casting film-forming method, a solution coating method, a wet film-forming method (a method of performing discharge into a poor solvent), a gel film-forming method (a method of cooling and gelling an PVA-based polymer aqueous solution once and then extracting and removing a solvent), a method of combining these, a melt-extrusion film-forming method of performing melting a composition containing a plasticizer or the like. Among these, films obtained by a casting film-forming method, a solution coating method and a melt-extrusion film-forming method are preferable.

The film obtained in this manner can be, as necessary, uniaxially or biaxially stretched before and after the drying process. Stretching may be performed using a device such as a pressurizing press. Stretching conditions include a temperature of 20 to 120°C and a stretching magnification of preferably 1.05 to 5 and more preferably 1.1 to 3. In addition, as necessary, the stretched film is thermally fixed and the residual stress can be reduced.

The polyvinyl alcohol film of the present invention may be appropriately processed and molded into a desired shape.

Examples

The present invention is specifically described in the following using examples, but the present invention is not limited to or by these examples. Unless specifically indicated otherwise, in the following "parts" indicates "mass parts" and "%" indicates "mass%".

[Production Example 1: Production of Nanocellulose]

350 g of sodium hypochlorite pentahydrate crystals having an available chlorine concentration of 42 mass% were put into a beaker, pure water was added thereto and stirred, and the available chlorine concentration was adjusted to 21 mass%. 35 mass% of hydrochloric acid was added thereto and stirred to obtain an aqueous solution with a pH of 11.

The sodium hypochlorite aqueous solution was heated at 30°C in a thermostatic water bath while stirring at 200 rpm using a propeller type stirring blade in a stirrer (three-one motor, BL600 commercially available from Shinto Scientific Co., Ltd.) and 50 g of powder cellulose (KC Flock W-100GK commercially available from Nippon Paper Industries Co., Ltd.) as a cellulose raw material was then added thereto.

After the cellulose raw material was supplied, while maintaining the temperature in the same thermostatic water tank at 30°C, the pH during the reaction was adjusted to 11 while adding 48 mass% of sodium hydroxide, the reaction time was 30 minutes, and stirring was performed with a stirrer under the same conditions.

After the reaction was completed, the product was subjected to solid-liquid separation by suction filtration using a PVDF mesh filter with an opening of 45 μm, and the obtained oxidized cellulose was washed with pure water.

Pure water was added to oxidized cellulose to prepare a 5% dispersion, which was subjected to a 14-pass treatment at 200 MPa using an ultra-high pressure homogenizer ("Star Burst Labo" commercially available from Sugino Machine Ltd.) to obtain a nanocellulose aqueous dispersion.

Here, in the ultra-high pressure homogenizer, fibrillation was performed by liquid-pass circulating an oxidized cellulose aqueous dispersion through a built-in ultra-high pressure fibrillation section. One pass of liquid passing through the fibrillation section is called one pass.

The residual nitrogen component derived from N-oxyl compounds in CNF was measured as a nitrogen content using a trace total nitrogen analysis device (device name: TN-2100H commercially available from Mitsubishi Chemical Analytech Co., Ltd.), and the result obtained by calculating an amount of increase from the raw material pulp was 1 ppm or less.

The available chlorine concentration in the aqueous sodium hypochlorite solution was measured using the following method.

(Measurement of the available chlorine concentration in the aqueous sodium hypochlorite solution)

0.582 g of an aqueous solution of sodium hypochlorite pentahydrate crystals added to pure water was precisely weighed out, and 50 mL of pure water was added and 2 g of potassium iodide and 10 mL of acetic acid were added, followed immediately by tight sealing and standing for 15 minutes in a dark location. After the standing for 15 minutes, the liberated iodine was titrated with a 0.1 mol/L sodium thiosulfate solution, which resulted in a titration volume of 34.55 mL (indicator: starch reagent solution). Correction was performed by carrying out a separate blank test. Since 1 mL of the 0.1 mol/L sodium thiosulfate solution corresponded to 3.545 mg Cl, the available chlorine concentration in the aqueous sodium hypochlorite solution was 21 mass%.

The carboxy group content in the oxidized cellulose was measured using the following method.

(Measurement of the carboxy group content)

To 60 mL of an aqueous oxidized cellulose dispersion adjusted to an oxidized cellulose concentration of 0.5 mass%, was added 0.1 M aqueous hydrochloric acid solution to bring the pH to 2.5. This was followed by the dropwise addition of a 0.05 N aqueous sodium hydroxide solution and measurement of the electrical conductivity until the pH reached 11.0, and the carboxy group content (mmol/g) was calculated using the following formula from the amount (a) of sodium hydroxide consumed in the weak acid neutralization stage where the electrical conductivity undergoes a gentle change.

$$\text{carboxy group content} = a\ (mL) \times 0.05/\ \text{mass (g) of the oxidized cellulose}$$

[Production Example 2]

Production was performed in the same manner as in Production Example 1 except that the reaction time was 2 hours.

[Measurement of Average Fiber Length and Average Fiber Width]

Pure water was added to the nanocellulose aqueous dispersion obtained above, and the nanocellulose concentration in the CNF aqueous dispersion was adjusted to 5 ppm. The CNF aqueous dispersion after the concentration was adjusted was naturally dried on a mica substrate, and the shape of nanocellulose was observed in an AC mode using a scanning probe microscope ("MFP-3D infinity" commercially available from Oxford Asylum).

The fiber length was analyzed by binarizing the obtained image using image processing software "Imaged". For 100 or more fibers, the number-average fiber length was obtained by fiber length="circumference length"÷2.

Regarding the average fiber width, using software bundled into "MFP-3D infinity", for 50 or more fibers, the number-average fiber width [nm] was obtained by the cross-sectional height of the shape image=fiber width.

[Measurement of Zeta Potential]

Pure water was added to the nanocellulose aqueous dispersion obtained above and dilution was performed so that the nanocellulose concentration was 0.1%. 0.05 mol/L of a sodium hydroxide aqueous solution was added to the diluted nanocellulose aqueous dispersion, the pH was adjusted to 8.0, and the zeta potential was measured at 20°C using a zeta potential meter (ELSZ-1000, commercially available from Otsuka Electronics Co., Ltd.).

[Measurement of Light Transmittance]

The nanocellulose aqueous dispersion obtained above was put into a quartz cell with a thickness of 10 mm, and the light transmittance was measured with a spectrophotometer (JASCO V-550) at a wavelength of 660 nm.

[Measurement of Viscosity Average Degree of Polymerization]

The oxidized cellulose was added to an aqueous sodium borohydride solution that had been adjusted to pH 10, and a reduction treatment was run for 5 hours at 25°C. The amount of sodium borohydride was 0.1 g per 1 g of the oxidized cellulose. After the reduction treatment, solid-liquid separation and water washing were performed by suction filtration, and the obtained oxidized cellulose was freeze-dried. 0.04 g of the dried oxidized cellulose was added to 10 mL pure water; stirring was performed for 2 minutes; and 10 mL of a 1 M cupriethylenediamine solution was added and dissolution was carried out. Then, using a capillary viscometer, the efflux time of a blank solution and the efflux time of the cellulose solution were measured at 25°C. The relative viscosity ($\eta_r$), specific viscosity ($\eta_{sp}$), and intrinsic viscosity ($[\eta]$) were determined in order using the following formulas from the efflux time (t0) for the blank solution, the efflux time (t) for the cellulose solution, and the oxidized cellulose concentration (c [g/mL]), and the degree of polymerization (DP) of the oxidized cellulose was calculated using the viscosity law formula.

$$\eta r = \eta/\eta 0 = t/t0$$

$$\eta sp = \eta r - 1$$

$$[\eta] = \eta sp/ (100 \times c (1+0.28\eta sp))$$

$$DP = 175 \times [\eta]$$

Table 1 shows physical properties of the nanocellulose of Production Example 1, the nanocellulose of Production Example 2, and CNF (Rheocrysta (registered trademark) I-2SX, commercially available from DKS Co., Ltd.) used in Comparative Example 1. CNF of Comparative Example 1 was CNF obtained by performing refining by TEMPO oxidation.

[Table 1]

|  | Production Example 1 | Production Example 2 | I-2SX |
|---|---|---|---|
| Type of oxidation | Hypochlorite oxidation | Hypochlorite oxidation | TEMPO oxidation |
| Average fiber length (nm) | 250 | 190 | 860 |
| Average fiber width (nm) | 3.0 | 3.0 | 2.1 |
| Carboxy group content (mmol/g) | 0.47 | 0.70 | 2.0 |
| Zeta potential (mV) | -53.4 | -58.3 | -70.8 |
| Light transmittance (%) | 98.0 | 98.8 | 98.1 |
| Degree of polymerization | 134 | 89 | 461 |

[Example 1]

0.94 g of 0.5 M hydrochloric acid was added to 100.0 g of an aqueous dispersion containing nanocellulose of Production Example 1 (a nanocellulose concentration of 1.3 mass%) and stirred, and the carboxy group of nanocellulose was converted into an acid form. Here, styrene (also referred to as St) and acrylonitrile (also referred to as AN) were added as ethylenically unsaturated monomers, the mixture was dispersed with ultrasonic waves, and 0.091 g (including 5 g of ethanol, the same applies hereinafter) of monododecylamine (also referred to as MDA) was then added and stirred. The inside of the reaction container was heated to 70°C in a nitrogen atmosphere, ammonium persulfate (APS) was added as a polymerization initiator, and the mixture was heated for 4 hours for polymerization.

After the polymerization was completed, a post-treatment such as heat drying was performed to obtain a resin composition (resin modifier) containing nanocellulose of Production Example 1 and a polymer of an ethylenically unsaturated monomer.

[Example 2]

3.93 g of styrene, 1.68 g of acrylonitrile, and 0.35 g of a 1 mass% ammonium persulfate aqueous solution were added to 100 g of a dispersion containing nanocellulose of Production Example 2 (a nanocellulose concentration of 1.3 mass%). The mixture was dispersed with ultrasonic waves and then heated at 70°C for 4 hours in a nitrogen atmosphere with stirring for polymerization.

After the polymerization was completed, 1.40 g of 0.5 M hydrochloric acid was added to a reaction solution and filtered, 0.32 g of a 40% tetrabutylammonium hydroxide (also referred to as TBAH) aqueous solution was additionally added and stirred, and the nanocellulose of Production Example 1 and fine resin particles were precipitated.

The sample was filtered and a post-treatment such as washing was performed to obtain a resin composition (resin modifier) containing nanocellulose of Production Example 2 and a polymer of an ethylenically unsaturated monomer.

[Comparative Example 1]

The procedure was performed in the same manner as in Example 1 except that commercially available CNF (Rheocrysta (registered trademark) I-2SX, commercially available from DKS Co., Ltd.) (a nanocellulose concentration of 2 mass%) was used as nanocellulose.

<Evaluation of Strength>

The resin modifiers obtained in Examples 1 and 2, and Comparative Example 1 were added to an ABS resin (product number ABS130 commercially available from Techno-UMG Co., Ltd.), which is a moldable resin, in an amount of 0.5 to 2 mass% (in terms of nanocellulose) of the total.

Specifically, the resin modifier and ABS resin pellets were mixed in a cup, and the mixture was then heated and kneaded using a Plastomill. The kneading temperature was 160°C, and the kneading time was 9 minutes. Then, pressurization was performed using a pressure machine at 180°C for 2 minutes, and the kneaded component was made flat. The pressure was 10 MPa for a first 1 minute and 15 MPa for ta next 1 minute. A test piece having a No. 3 dumbbell (a thickness of 1 mm) shape defined in JIS K 6251: 2010 was produced using the obtained flat kneaded component. Similarly, a test piece was produced using an ABS resin to which no resin modifier was added.

[3-Point Bending Test]

A 3-point bending test was performed using the test piece. Specifically, a bending test (test speed: 5 mm/min, distance between fulcrums: 30 mm) defined in JIS K 7171: 2016 was performed using the test piece, and the bending elastic modulus (MPa), the breaking stress (MPa) and the breaking strain (%) were measured.

Fig. 1 shows the results of the breaking strain and the breaking stress. In Fig. 1, resins with 0.5 mass%, 1.0 mass%, and 2 mass% of the resin modifier (amount of nanocellulose) of Example 1 are shown as Examples 3, 4, and 5. In addition, the resin modifier (2.0 mass% in terms of nanocellulose) of Comparative Example 1 is shown as Comparative Example 2.

[Charpy Impact Test]

A charpy impact test (notch tip radius: rN=0.25 mm) defined in JIS K 7111-1: 2012 was performed using the test piece, and the impact strength ($kJ/m^2$) was measured.

Table 2 shows the evaluation results of the bending elastic modulus and the impact strength (charpy impact).

[Table 2]

| | CNF production method | | | Physical properties of CNF-Na | | | | | | MB configuration | | Physical properties of resin containing MB | | | | | |
|---|---|---|---|---|---|---|---|---|---|---|---|---|---|---|---|---|---|
| | Oxidation method | Fibrillation method | Number of passes | Fiber length nm | Fiber width nm | Acid value mmol/g | Zeta potential mV | Light transmittance % | Degree of polymerization of oxidized cellulose | Amine | Resin | Bending elastic modulus MPa 1% | 2% | Charpy impact kJ/m$^2$ 1% | 2% | Linear expansion coefficient ppm 1% | 2% |
| Example 1 | Hypochlorite | Labo SB | 14 passes | 250 | 3.0 | 0.47 | -53.4 | 98.0 | 134 | MDA | AS | 2713 | 2802 | 15.5 | 11.0 | 125.3 | 120.6 |
| Example 2 | Hypochlorite | Labo SB | 4 passes | 190 | 3.0 | 0.70 | -58.3 | 98.8 | 89 | TBAH | AS | 2680 | 2778 | 15.2 | 10.5 | 125.4 | 120.8 |
| Comparative Example 1 | TEMPO | - | - | 860 | 2.1 | 2.0 | -70.9 | 98.1 | 461 | MDA | AS | 2574 | 2610 | 7.6 | 5.5 | 126.2 | 123.0 |

[Production Example 3: Production of Oxidized Cellulose]

350 g of sodium hypochlorite pentahydrate crystals having an available chlorine concentration of 42 mass% were put into a beaker, and pure water was added and stirred to adjust the available chlorine concentration to 21 mass%. 35 mass% of hydrochloric acid was added thereto and stirred to obtain a sodium hypochlorite aqueous solution having a pH of 11.

The sodium hypochlorite aqueous solution was heated at 30°C in a thermostatic water bath while stirring at 200 rpm using a propeller type stirring blade in a stirrer (three-one motor, BL600 commercially available from Shinto Scientific Co., Ltd.), and 50 g of powder pulp (VP-1, commercially available from TDI Corporation) as a cellulose raw material was then added thereto.

After the cellulose raw material was supplied, while maintaining the temperature in the same thermostatic water tank at 30°C, the pH during the reaction was adjusted to 11 while adding 48 mass% of sodium hydroxide, and the mixture was stirred with a stirrer for 2 hours under the same conditions.

After the reaction was completed, by repeating centrifugation (1000G, for 10 minutes), decantation, and addition of pure water in an amount corresponding to the removed liquid, oxidized cellulose (a solid content concentration of 13%) was collected.

Here, the solid content concentration was calculated by drying the obtained oxidized cellulose at 110°C for 2 hours and from the formula (mass of dry product/mass of oxidized cellulose)×100 from the mass of the dry product.

Table 3 shows the physical properties of the oxidized cellulose of Production Example 3.

[Table 3]

|  | Production Example 3 |
| --- | --- |
| Type of oxidation | Hypochlorite oxidation |
| Carboxy group content (mmol/g) | 0.7 |
| Degree of polymerization of oxidized cellulose | 89 |

[Example 6]

800 g of water was added to 15.6 g of oxidized cellulose (a solid content of 13%) of Production Example 3, a fibrillation treatment was performed using "TK ROBOMIX" (commercially available from Primix Corporation) at 10,000 rpm for 10 minutes, and 203.9 g of the sample was then collected and transferred to a flask. Some cellulose was taken and it was confirmed by the above measurement that the oxidized cellulose of Production Example 3 was fibrillated into nanocellulose. That is, the light transmittance of the nanocellulose was 95.03%, the zeta potential was - 42.3 mV, the average fiber length was 200 nm, and the average fiber width was 3 nm. 27.8 g of polybutadiene latex (a concentration of 54%), 67 g of styrene (St), 19 g of acrylonitrile (AN), 0.41 g of dodecanethiol, and 1.3 g of cumene hydroperoxide were added thereto, and the mixture was dispersed using TK ROBOMIX at 10,000 rpm for 5 minutes.

While blowing nitrogen into the reaction container at 100 mL/min, heating was performed to 70°C, and after 1 hour, an aqueous solution containing 1.7 g of glucose and 8.1 g of water and an aqueous solution containing 0.86 g of pyrophosphate and 4.0 g of water were added, and the mixture was polymerized for 3 hours.

After the polymerization was completed, the reaction solution was cooled to room temperature, a solution containing 0.33 g of monododecylamine and 30 g of methanol was added, the polymer and nanocellulose were precipitated, filtered, and washed with water and then dried to obtain a composite A-1 of nanocellulose and an ABS resin.

[Example 7]

800 g of water was added to 15.6 g of oxidized cellulose (a solid content of 13%) of Production Example 3, a fibrillation treatment was performed using "TK ROBOMIX" (commercially available from Primix Corporation) at 10,000 rpm for 10 minutes, and 203.9 g of a nanocellulose dispersion was then collected. Some cellulose was taken and it was confirmed by the above measurement that the oxidized cellulose of Production Example 3 was fibrillated into nanocellulose. That is, the light transmittance of the nanocellulose was 95.03%, the zeta potential was - 42.3 mV, the average fiber length was 200 nm, and the average fiber width was 3 nm.

On the other hand, 200 g of water was added to the reaction container, 2.5 g of sodium lauryl sulfate, 27.8 g of polybutadiene latex (a concentration of 54%), 67 g of styrene (St), 19 g of acrylonitrile (AN), 0.41 g of dodecanethiol, and 1.3 g of cumene hydroperoxide were added thereto, and the mixture was dispersed using TK ROBOMIX at 10,000 rpm for 5 minutes.

While blowing nitrogen into the reaction container at 100 mL/min, heating was performed to 70°C, and after 1 hour, an aqueous solution containing 1.7 g of glucose and 8.1 g of water and an aqueous solution containing 0.86 g of pyrophosphate and 4.0 g of water were added, and the mixture was polymerized for 3 hours, and a total amount of 203.9 g of the fibrillated nanocellulose dispersion was then added.

Sodium chloride and a solution containing 0.33 g of monododecylamine and 30 g of methanol were added thereto, the polymer and nanocellulose were precipitated, and the reaction solution was heated at 95°C for 0.5 hours and then cooled, filtered, washed with water and then dried to obtain a composite B-1.

[Example 8]

31.0 g of oxidized cellulose (a solid content of 13%) of Production Example 3 was added to 784 g of water, and stirred until the mixture became uniform and 206.5 g of the sample was then collected and transferred to a flask. 27.8 g of polybutadiene latex (a concentration of 54%), 67 g of styrene (St), 19 g of acrylonitrile (AN), 0.41 g of dodecanethiol, and 1.3 g of cumene hydroperoxide were added thereto and the mixture was dispersed using TK ROBOMIX at 10,000 rpm for 5 minutes. Here, the fact that the oxidized cellulose of Production Example 3 was fibrillated into nanocellulose was confirmed when 31.0 g of oxidized cellulose (a solid content of 13%) of Production Example 3 was added to 784 g of water, and the mixture was dispersed using TK ROBOMIX at 10,000 rpm for 5 minutes. The light transmittance of the nanocellulose was 95.03%, the zeta potential was -42.3 mV, the average fiber length was 200 nm, and the average fiber width was 3 nm.

While blowing nitrogen into the container at 100 mL/min, heating was performed to 70°C, and after 1 hour, an aqueous solution containing 1.7 g of glucose and 8.1 g of water and an aqueous solution containing 0.86 g of pyrophosphate and 4.0 g of water were added, and the mixture was polymerized for 3 hours.

After the polymerization was completed, the reaction solution was cooled to room temperature, a solution containing 0.33 g of monododecylamine and 30 g of methanol was added, the polymer and nanocellulose were precipitated, filtered, washed with water and then dried to obtain a composite C-1 of nanocellulose and an ABS resin.

[Example 9]

The procedure was performed in the same manner as in Example 8 according to Table 4 to obtain a composite D-1 of nanocellulose and an ABS resin.

Here, in the process of precipitating the polymer and nanocellulose, in Example 9, a magnesium stearate isopropanol solution was used in place of a monododecylamine methanol solution.

[Example 10]

The procedure was performed in the same manner as in Example 8 according to Table 4 to obtain a composite E-1 of nanocellulose and an ABS resin.

[Comparative Example 3]

200 g of water was added to the reaction container, 2.5 g of sodium lauryl sulfate, 27.8 g of polybutadiene latex (a concentration of 54%), 67 g of styrene (St), 19 g of acrylonitrile (AN), 0.41 g of dodecanethiol, and 1.3 g of cumene hydroperoxide were added thereto, and the mixture was dispersed using TK ROBOMIX at 10,000 rpm×10 minutes.

While blowing nitrogen into the reaction container at 100 mL/min, heating was performed to 70°C, and after 1 hour, an aqueous solution containing 1.7 g of glucose and 8.1 g of water and an aqueous solution containing 0.86 g of pyrophosphate and 4.0 g of water were added, and the mixture was polymerized for 3 hours.

Sodium chloride was added thereto, and the polymer was precipitated, heated at 95°C for 0.5 hours and then cooled, filtered, washed with water and then dried to obtain an ABS resin F-1.

The composites A-1 to E-1 and ABS resin F-1 were pressed using a pressure machine at 180°C for 2 minutes and made flat. The pressure was 10 MPa for afirst 1 minute and 15 MPa for a next 1 minute. A test piece having a No. 3 dumbbell (a thickness of 1 mm) shape defined in JIS K6251 : 2010 was produced using the obtained flat kneaded component. A 3-point bending test was performed according to the above method, and the bending elastic modulus (MPa) and the bending strength (MPa) were measured. In addition, the charpy impact was measured according to the above method.

The results are shown in Table 4.

[Table 4]

| | | | Example 6 A-1 | Example 7 B-1 | Example 8 C-1 | Example 9 D-1 | Example 10 E-1 | Comparative Example 4 F-1 |
|---|---|---|---|---|---|---|---|---|
| Composite | | Amount of CNF added (parts by mass) | 0.5 | 0.5 | 1 | 2 | 5 | 0 |
| | | ABS (parts by mass) | 99.5 | 99.5 | 99 | 98 | 95 | 100 |
| Oxidized cellulose | | Amount of 13% oxidized cellulose (g) | 15.6 | 15.6 | 31.0 | 62.6 | 161.0 | 0 |
| | | Water (g) | 800 | 800 | 784.2 | 752.2 | 652.1 | 0 |
| | | Subtotal | 815.6 | 815.6 | 815.2 | 814.8 | 813.1 | 0 |
| | | Collected amount (g) | 203.9 | 203.9 | 206.5 | 206.5 | 206.5 | 0 |
| | | Amount of oxidized cellulose in collected amount (g) | 0.51 | 0.51 | 1.02 | 2.06 | 5.32 | 0 |
| | | Oxidized cellulose (mass%) | 0.25 | 0.25 | 0.49 | 1.00 | 2.57 | 0.00 |
| | | Acid value (mmol/g) | 0.7 | 0.7 | 0.7 | 0.7 | 0.7 | 0 |
| Mixing of raw materials of resin composite | Oxidized cellulose | Amount of oxidized cellulose (g) | 0.51 | 0.51 | 1.02 | 2.06 | 5.32 | 0 |
| | | Water (g) | 203.4 | 203.4 | 205.5 | 204.4 | 201.2 | 0 |
| | | Subtotal (collected amount) | 203.9 | 203.9 | 206.5 | 206.5 | 206.5 | 0 |
| | Water | | 0 | 0 | 0 | 0 | 0 | 200 |
| | Latex seed | nipoILX1 11 A2 | 15.0 | 15.0 | 15.0 | 15.0 | 15.0 | 15.0 |
| | | Water | 12.8 | 12.8 | 12.8 | 12.8 | 12.8 | 12.8 |
| | | Subtotal | 27.8 | 27.8 | 27.8 | 27.8 | 27.8 | 27.8 |
| | Monomer | Styrene | 67 | 67 | 67 | 67 | 67 | 67 |
| | | Acrylonitrile | 19 | 19 | 19 | 19 | 19 | 19 |
| | Chain transfer agent | Dodecanethiol | 0.41 | 0.41 | 0.41 | 0.41 | 0.41 | 0.41 |

(continued)

| | | | Example 6 A-1 | Example 7 B-1 | Example 8 C-1 | Example 9 D-1 | Example 10 E-1 | Comparative Example 4 F-1 |
|---|---|---|---|---|---|---|---|---|
| | Initiator | Cumene hydroperoxide | 1.3 | 1.3 | 1.3 | 1.3 | 1.3 | 1.3 |
| | Emulsifier | Lauryl sulfate Na | | 2.5 | | | | 2.5 |
| | Reducing agent (1) | Glucose | 1.7 | 1.7 | 1.7 | 1.7 | 1.7 | 1.7 |
| | | Water | 8.1 | 8.1 | 8.1 | 8.1 | 8.1 | 8.1 |
| | Reducing agent (2) | Pyrophosphate Na | 0.86 | 0.86 | 0.86 | 0.86 | 0.86 | 0.86 |
| | | Water | 4.0 | 4.0 | 4.0 | 4.0 | 4.0 | 4.0 |
| | | Total | 317.7 | 317.7 | 320.3 | 320.3 | 320.3 | 313.8 |
| | | Polymer NV% | 31.8 | 31.8 | 31.5 | 31.5 | 31.5 | 32.2 |
| | | CNF/resin% | 0.50 | 0.50 | 1.00 | 2.00 | 5.00 | 0.00 |
| | Hydrophobic agent | Monododecylamine | 0.33 | 0.33 | 0.66 | | 3.45 | |
| | | Stearate Mg | | | | 0.85 | | |
| | | Methanol | 5 | 5 | 5 | | 10 | |
| | | Isopropanol | | | | 100 | | |
| 3-point bending test result | | Elastic modulus (GPa) | 2.29 | 2.24 | 2.39 | 2.47 | 2.53 | 1.91 |
| | | Strength (MPa) | 69.2 | 69.2 | 69.1 | 69.7 | 70 | 53 |
| Charpy impact (kJ/m$^2$) | | | 23.8 | 24.0 | 21.4 | 18.7 | 18.2 | 29.0 |

EP 4 215 550 A1

[Example 11]

2.85 g of oxidized cellulose (a solid content of 13 mass%) of Production Example 3 was added to 180 g of water, the mixture was dispersed using TK ROBOMIX at 10,000 rpm×10 minutes until the mixture became uniform, and a 0.2 mass% nanocellulose aqueous dispersion was prepared. Some cellulose was taken and it was confirmed by the above measurement that the oxidized cellulose of Production Example 3 was fibrillated into nanocellulose. The light transmittance of the nanocellulose was 95.03%, the zeta potential was -42.3 mV, the average fiber length was 200 nm, and the average fiber width was 3 nm.

Separately, 5 g of PVA28-98 (commercially available from Kuraray Co., Ltd.) (a degree of saponification 98%, a degree of polymerization of 1,700) as polyvinyl alcohol and 95 g of water were added, and dissolved at 100 rpm for 5 hours using a mix rotor to prepare a 5 mass% polyvinyl alcohol aqueous solution.

26.3 g of a 0.2 mass% nanocellulose aqueous dispersion (a solid content of 0.0526 g) and 20 g of a 5 mass% polyvinyl alcohol aqueous solution (a solid content of 1.0 g) were mixed and then mixed using a mix rotor at 100 rpm for 5 hours to obtain a film-forming stock solution A.

The film-forming stock solution A was cast on a glass plate covered with a PET film at room temperature to form a film with a thickness of 200 $\mu$m after drying. The sample was put into a vacuum dryer, heated and dried at 40°C under normal pressure for 1 day and then dried at 40°C under a reduced pressure of 0.1 kPa for 1 day, and then pressed using a lithographic heating and pressurizing press at 150°C and 1 MPa for 2 minutes, subsequently at 150°C and 3 MPa for 2 minutes, and finally, at 25°C and 3 MPa for 2 minutes, and a PVA sheet G-1 containing 5 mass% of nanocellulose in polyvinyl alcohol was obtained. The obtained flat PVA sheet was cut into a width of 5 mm and a length of 80 mm to produce a test piece.

A tensile test was performed according to the above method and the tensile modulus (MPa) was measured to be 1,050 Mpa. In addition, the appearance had excellent transparency with no turbidity or foreign substance visually observed. The results are shown in Table 5.

[Example 12]

A PVA sheet H-1 was obtained in the same manner except that the amount of the 0.2 mass% nanocellulose aqueous dispersion used in Example 11 was changed to 5.05 g (a solid content of 0.0101 g) so that 1 mass% of nanocellulose was contained in polyvinyl alcohol. A tensile test was performed according to the above method and the tensile modulus (MPa) was measured to be 320 Mpa. In addition, the appearance had excellent transparency with no turbidity or foreign substance visually observed. The results are shown in Table 5.

[Example 13]

A sheet was obtained in the same manner as in Example 11 except that a polyvinyl butyral resin (S-LEC BM-1 commercially available from Sekisui Chemical Co., Ltd.) was used in place of PVA28-98 (commercially available from Kuraray Co., Ltd.), isopronol was used as a liquid used for dissolution in place of water, and an isopronol solution containing 5 mass% of a polyvinyl butyral resin was used. In the sheet of Example 13, the appearance had excellent transparency with no turbidity or foreign substance visually observed.

[Comparative Example 5]

A PVA sheet I-1 containing 1 mass% of nanocellulose in polyvinyl alcohol was obtained in the same manner as in Example 12 except that commercially available CNF (Rheocrysta (registered trademark) I-2SX, commercially available from DKS Co., Ltd.) was used as nanocellulose. A tensile test was performed according to the above method and the tensile modulus (MPa) was measured to be 260 Mpa. In addition, the appearance had excellent transparency with no turbidity or foreign substance visually observed. The results are shown in Table 5.

[Comparative Example 6]

A PVA sheet J-1 was obtained in the same manner as in Example 12 except that no nanocellulose was added. A tensile test was performed according to the above method and the tensile modulus (MPa) was measured to be 185 Mpa. In addition, the appearance had excellent transparency with no turbidity or foreign substance visually observed. The results are shown in Table 5.

[Example 14]

A PVA sheet K-1 containing 1 mass% of nanocellulose in polyvinyl alcohol was obtained in the same manner as in Example 12 except that, when PVA28-98 (commercially available from Kuraray Co., Ltd.) was dissolved in water, the oxidized cellulose of Production Example 3 was added and the mixture was then dispersed using TK ROBOMIX at 10,000 rpm×10 minutes. A tensile test was performed according to the above method and the tensile modulus (MPa) was measured to be 375 Mpa. In addition, the appearance had excellent transparency with no turbidity or foreign substance visually observed. The results are shown in Table 5.

[Table 5]

| | | Example 11 G-1 | Example 12 H-1 | Comparative Example 5 I-1 | Comparative Example 6 J-1 | Example 14 K-1 |
|---|---|---|---|---|---|---|
| Composite | Nanocellulose (solid content) (parts by mass) | 5 | 1 | 1 | - | 1 |
| | PVA (solid content) (parts by mass) | 95 | 99 | 99 | 100 | 99 |
| 0.2 mass% nanocellulose | Amount of 13 mass% oxidized cellulose (g) | 2.85 | 2.85 | | - | - |
| | 2 mass% I-2SX, (g) | | | 20 | - | - |
| | Water (g) | 180 | 180 | 180 | - | - |
| | Subtotal | 182.85 | 182.85 | 200.0 | - | - |
| | Collected amount (g) | 26.3 | 5.05 | 5.05 | - | - |
| 5 mass% PVA | PVA28-98 (g) | 5 | 5 | 5 | 5 | - |
| | Water (g) | 95 | 95 | 95 | 95 | - |
| | Subtotal | 100.0 | 100.0 | 100.0 | 100.0 | - |
| | Collected amount (g) | 20.0 | 20.0 | 20.0 | 20.0 | - |
| Nanocellulose/PVA mixed solution | PVA28-98 (g) | - | - | - | - | 5 |
| | Water (g) | - | - | - | - | 94.611 |
| | Amount of 13 mass% oxidized cellulose (g) | - | - | - | - | 0.389 |
| | Subtotal | - | - | - | - | 100 |
| | Collected amount (g) | - | - | - | - | 25 |
| Test result | Tensile modulus (MPa) | 1050 | 320 | 260 | 185 | 375 |

[Production Example 4: Production of Modified Oxidized Cellulose]

0.5 M hydrochloric acid was added to the oxidized cellulose of Production Example 3 with stirring, the pH was adjusted to 2, and the carboxy group of the oxidized cellulose was converted into an acid form. Monododecylamine and isopropanol were added thereto, the pH was adjusted to 7, and thus modified oxidized cellulose (a solid content concentration of 14%) was collected. The type of oxidation, the carboxy group content, and the degree of polymerization of the oxidized cellulose did not change from those of the oxidized cellulose of Production Example 3.

[Example 15]

A sheet was obtained in the same manner as in Example 11 except that the modified oxidized cellulose of Production Example 4 was used as the oxidized cellulose. In the sheet of Example 15, the appearance had excellent transparency with no turbidity or foreign substance visually observed.

The composition of the present invention has an excellent elastic modulus and excellent transparency when formed into a sheet, and is particularly useful as a film material. In addition to optical applications such as polarizing plates, films can be applied as water soluble films and biodegradable films for hydraulic transfer, for liquid packaging such as liquid detergents, for powder packaging for agricultural chemicals and medicines, and for laundry bags for medical clothing. In addition, it can be formed into fibers and can be applied to paper processing agents, fiber processing agents, fiber pastes, paints, coating agents, adhesives and the like.

Industrial Applicability

The resin composition of the present invention can reinforce resins, and has industrial applicability in the field of reinforced resins.

**Claims**

1. A resin composition comprising a nanocellulose and a polymer of an ethylenically unsaturated monomer, wherein the nanocellulose

   comprises an oxide of a cellulose raw material by a hypochlorous acid or a salt thereof,
   is substantially free of a N-oxyl compound, and
   satisfies following (I) and/or (II):

   (I) zeta potential is -30 mV or less; and
   (II) light transmittance in a mixed solution in which the nanocellulose and water are mixed and which has a solid content concentration of 0.1 mass% is 95% or more.

2. The resin composition according to claim 1,
   wherein the nanocellulose has zeta potential of -70 mV or more.

3. The resin composition according to claim 1 or 2,
   wherein the nanocellulose has a carboxy group content of 0.30 mmol/g or more and less than 2.0 mmol/g.

4. The resin composition according to any one of claims 1 to 3,

   wherein the nanocellulose is derived from an oxidized cellulose, and
   wherein a degree of polymerization of the oxidized cellulose is 600 or less.

5. The resin composition according to any one of claims 1 to 4,
   wherein the polymer of the ethylenically unsaturated monomer comprises a rubber-modified styrene resin.

6. The resin composition according to any one of claims 1 to 4,
   wherein the polymer of the ethylenically unsaturated monomer comprises a polyvinyl alcohol.

7. The resin composition according to any one of claims 1 to 6,
   wherein an amount of the polymer of the ethylenically unsaturated monomer with respect to 100 parts by mass of the nanocellulose is 5 parts by mass or more and 1,000 parts by mass or less.

8. The resin composition according to any one of claims 1 to 7,
   wherein at least part of the nanocellulose is modified with a metallic soap, an amine or a quaternary ammonium.

9. A method of producing a resin composition, the method comprising a step of polymerizing an ethylenically unsaturated monomer in the presence of a nanocellulose, wherein the nanocellulose

   is an oxide of a cellulose raw material by a hypochlorous acid or a salt thereof,
   is substantially free of a N-oxyl compound, and
   satisfies following (I) and/or (II):

   (I) zeta potential is -30 mV or less; and
   (II) light transmittance in a mixed solution in which the nanocellulose and water are mixed and which has a solid content concentration of 0.1 mass% is 95% or more.

**10.** The production method according to claim 9,
wherein the polymerization method is an emulsion polymerization or a suspension polymerization.

**11.** A method of producing a resin composition comprising a nanocellulose and a polymer of an ethylenically unsaturated monomer, the method comprising:

a step of stirring a first mixture comprising an oxidized cellulose and an ethylenically unsaturated monomer to obtain a second mixture comprising the nanocellulose and the polymer of the ethylenically unsaturated monomer; and
a step of polymerizing the ethylenically unsaturated monomer using the second mixture,
wherein the oxidized cellulose comprises an oxide of a cellulose raw material by a hypochlorous acid or a salt thereof.

**12.** A method of producing a resin composition comprising a nanocellulose and a polymer of an ethylenically unsaturated monomer, the method comprising:

a step of stirring an oxidized cellulose and continuously adding the ethylenically unsaturated monomer to obtain a mixture comprising the nanocellulose and the ethylenically unsaturated monomer; and
a step of polymerizing the ethylenically unsaturated monomer using the mixture,
wherein the oxidized cellulose comprises an oxide of a cellulose raw material by a hypochlorous acid or a salt thereof.

**13.** The production method according to claim 11 or 12,
wherein the polymerization method is an emulsion polymerization or a suspension polymerization.

**14.** A method of producing a resin composition comprising a nanocellulose and a polymer of an ethylenically unsaturated monomer, the method comprising

a step of stirring a first mixture comprising an oxidized cellulose and the polymer of the ethylenically unsaturated monomer to obtain the resin composition comprising the nanocellulose and the polymer of the ethylenically unsaturated monomer,
wherein the oxidized cellulose comprises an oxide of a cellulose raw material by a hypochlorous acid or a salt thereof.

**15.** A method of producing a resin composition comprising a nanocellulose and a polymer of an ethylenically unsaturated monomer, the method comprising

a step of stirring an oxidized cellulose and continuously adding the polymer of the ethylenically unsaturated monomer to obtain the resin composition comprising the nanocellulose and the polymer of the ethylenically unsaturated monomer,
wherein the oxidized cellulose comprises an oxide of a cellulose raw material by a hypochlorous acid or a salt thereof.

**16.** The production method according to any one of claims 11 to 15,
wherein the oxidized cellulose is substantially free of a N-oxyl compound.

**17.** The production method according to any one of claims 11 to 16,
wherein a degree of polymerization of the oxidized cellulose is 600 or less.

**18.** The production method according to any one of claims 11 to 17, further comprising
a step of adding a metallic soap, an amine or a quaternary ammonium to precipitate the nanocellulose and the ethylenically unsaturated monomer.

**19.** A resin comprising the resin composition according to any one of claims 1 to 8.

**20.** A polyvinyl alcohol film produced from the resin composition according to claim 6.

[Fig. 1]

## INTERNATIONAL SEARCH REPORT

International application No.

**PCT/JP2021/033937**

**A.    CLASSIFICATION OF SUBJECT MATTER**

*C08B 15/02*(2006.01)i; *C08B 15/04*(2006.01)i; *C08F 251/02*(2006.01)i; *C08K 5/09*(2006.01)i; *C08K 5/17*(2006.01)i; *C08L 1/02*(2006.01)i; *C08L 1/04*(2006.01)i; *C08L 23/00*(2006.01)i; *C08L 25/04*(2006.01)i; *C08L 25/08*(2006.01)i; *C08L 29/04*(2006.01)i; *C08L 51/00*(2006.01)i; *C08F 2/18*(2006.01)i; *C08F 2/22*(2006.01)i; *C08F 2/44*(2006.01)i
FI:  C08L1/04; C08L23/00; C08F251/02; C08F2/44 C; C08B15/02; C08B15/04; C08L25/04; C08L51/00; C08F2/18; C08F2/22; C08K5/17; C08K5/09; C08L25/08; C08L29/04; C08L1/02 ZNM

According to International Patent Classification (IPC) or to both national classification and IPC

**B.    FIELDS SEARCHED**

Minimum documentation searched (classification system followed by classification symbols)

C08B15/02; C08B15/04; C08F251/02; C08K5/09; C08K5/17; C08L1/02; C08L1/04; C08L23/00; C08L25/04; C08L25/08; C08L29/04; C08L51/00; C08F2/18; C08F2/22; C08F2/44

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/066537 A1 (GS ALLIANCE CO LTD) 02 April 2020 (2020-04-02) claims, paragraph [0014], examples 1-3, etc. | 1-20 |
| A | WO 2014/192634 A1 (HARIMA CHEMICALS, INCORPORATED) 04 December 2014 (2014-12-04) | 1-20 |
| P, A | WO 2020/184177 A1 (TOAGOSEI CO LTD) 17 September 2020 (2020-09-17) | 1-20 |
| P, A | JP 2021-109942 A (GS ALLIANCE CO LTD) 02 August 2021 (2021-08-02) | 1-20 |

☐ Further documents are listed in the continuation of Box C.      ☑ See patent family annex.

| | | |
|---|---|---|
| *     Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&" | document member of the same patent family |
| "P"   document published prior to the international filing date but later than the priority date claimed | | |

| Date of the actual completion of the international search | Date of mailing of the international search report |
|---|---|
| **05 November 2021** | **16 November 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/033937** |

| Patent document<br>cited in search report | | | Publication date<br>(day/month/year) | Patent family member(s) | Publication date<br>(day/month/year) |
| --- | --- | --- | --- | --- | --- |
| WO | 2020/066537 | A1 | 02 April 2020 | (Family: none) | |
| WO | 2014/192634 | A1 | 04 December 2014 | (Family: none) | |
| WO | 2020/184177 | A1 | 17 September 2020 | (Family: none) | |
| JP | 2021-109942 | A | 02 August 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013014741 A


**Non-patent literature cited in the description**

- *Sustainable Chem. Eng.,* 2020, vol. 8 (48), 17800-17806